# EUROPEAN PATENT SPECIFICATION

(11) **EP 3 051 896 B1**
(45) Date of publication and mention of the grant of the patent: **11.09.2019**
(21) Application number: 14849473.5
(22) Date of filing: 26.09.2014
(51) Int. Cl.: H04W 72/02, H04L 5/00, H04L 5/14

(54) **PBCH TRANSMISSION METHOD, AND DEVICE**
PBCH-ÜBERTRAGUNGSVERFAHREN, UND -VORRICHTUNG
PROCÉDÉ, ET DISPOSITIF D'ÉMISSION DE PBCH

(30) Priority: 27.09.2013 CN 201310452085
(43) Date of publication of application: 03.08.2016
(73) Proprietor: China Academy of Telecommunications Technology, Hai Dian District Beijing 100191 (CN)
(72) Inventor: XU, Weijie, Beijing 100191 (CN); PAN, Xueming, Beijing 100191 (CN); SHEN, Zukang, Beijing 100191 (CN); XING, Yanping, Beijing 100191 (CN); JIA, Minli, Beijing 100191 (CN)
(74) Representative: Nony
(86) International application number: PCT/CN2014/087510
(87) International publication number: WO 2015/043500

(56) References cited:
- EP-A1- 3 047 685
- EP-A1- 3 050 243
- CN-A- 101 626 280
- CN-A- 102 076 018
- CN-A- 102 594 513
- US-A1- 2013 250 878
- SONY: "PBCH coverage extension for low-cost MTC UEs by power-density boosting", 3GPP DRAFT; R1-130958, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 5 April 2013 (2013-04-05), XP050696704, Retrieved from the Internet: URL:http://www.3gpp.org/ftp/tsg_ran/WG1_RL 1/TSGR1_72b/Docs/ [retrieved on 2013-04-05]
- QUALCOMM INCORPORATED: "PBCH Coverage Enhancement", 3GPP DRAFT; R1-131397 PBCH COVERAGE ENHANCEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chicago, USA; 20130415 - 20130419 6 April 2013 (2013-04-06), XP050697246, Retrieved from the Internet: URL:http://www.3gpp.org/ftp/tsg_ran/WG1_RL 1/TSGR1_72b/Docs/ [retrieved on 2013-04-06]

## Description

### Field

The present invention relates to the field of wireless communications and particularly to a method, system, and device for transmitting a PBCH.

### Background

The Machine Type Communication (MTC) function needs to be supported in the third-generation mobile communication system, and the Long Term Evolution (LTE). An MTC device (MTC terminal) can have a part of a number of Machine to Machine (M2M) communication characteristics, e.g., low mobility, a small amount of transmission data, insensitivity to a communication delay, extremely low power consumption as required, etc.

In the existing M2M network based on the Global System for Mobile Communication (GSM), the operators have identified that a wireless signal for a terminal operating in some scenario, e.g., a terminal operating underground, in a shopping mall, or at a corner of a building, may be significantly attenuated because the signal is seriously shielded, so the terminal may fail to communicate with the network, but deep coverage by the network in such a scenario may come with a considerable increase in the cost of deploying the network. The operators have identified from their tests that the coverage demand in the scenario above can be satisfied only if the existing GSM coverage is enhanced by 15 dB. The GSM for M2M transmission will be replaced by later LTE, and since the LTE coverage is substantially comparative to the GSM coverage, the requirement of M2M transmission in the scenario above will also be satisfied by enhancing the LTE coverage by 15 dB.

In order to enhance the coverage by 15 dB, a feasible approach is to retransmit or rate-match the existing channels in the LTE system to lower the coding rate of the channels. A Physical Broadcast Channel (PBCH) may be retransmitted nearly 100 times or more to thereby reach a coverage enhancement of 15 dB.

However there has been absent so far a solution to transmission of a PBCH with enhanced coverage.

US 2013/0250878 A1 discloses a method for supporting a Machine-Type Communication (MTC) User Equipment (UE). The method includes transmitting an MTC-specific Master Information Block (M-MIB) carrying information specific to a User Equipment (UE), via a MTC Physical Broadcast Channel (M-PBCH) to the MTC UE. The M-PBCH is transmitted in a M-PBCH subframe being different from a Physical Broadcast Channel (PBCH) subframe in which a PBCH is transmitted.

EP 3050243 A1 discloses methods and apparatus provided for a base station to transmit repetitions of broadcast information and for a UE to detect the broadcast information. In a first method, the base station maps each repetition in a respective quadruple of subframe symbols while accounting for a possible different number of available sub-carriers among quadruplets of subframe symbols. In a second method, the base station maps the repetitions successively in a available sub-carriers. For intermittent transmissions of repetitions, the UE can use the mapping structure of the repeated broadcast information to determine an existence of a transmission.

EP 3047685 A1 discloses coverage enhancements for physical broadcast channel (PBCH). The method generally includes receiving a physical downlink shared channel (PDSCH) transmission, receiving a different type downlink transmission, with transmit power boosted relative to the PDSCHtransmission, receiving information regarding relative transmit power of the PDSCH transmission relative to a common reference signal (CRS) based on the transmit power of the different type downlink transmission, and processing the PDSCH transmission based on the information.

### Summary

Embodiments of the invention provide a method, system, and device for transmitting a PBCH so as to transmit the PBCH with enhanced coverage.

An embodiment of the invention provides a method for transmitting a PBCH, the method including:
determining, by a network-side device, resources, in at least one radio frame, to which a PBCH with enhanced coverage is mapped; and
transmitting, by the network-side device, the PBCH with enhanced coverage over the resources determined;
   wherein determining, by the network-side device, the resources, in the at least one radio frame, to which the PBCH with enhanced coverage is mapped comprises:
   determining, by the network-side device, the following resources in the at least one radio frame as the resources to which the PBCH with enhanced coverage is mapped:
   a part or all of other Resource Elements, REs, than REs where Cell-specific Reference Signal, CRS, ports 0 to 3 are located, in a part or all of other symbols than symbols occupied by legacy PBCH, Secondary Synchronization Signals, SSSs, and Physical Downlink Control Channels, PDCCHs, in sub-frame 9; and/or
   a part or all of other REs than REs where CRS ports 0 to 3 are located, in a part or all of other symbols than symbols occupied by Primary Synchronization Signals, PSSs, and PDCCHs, in a Downlink Pilot Time Slot, DwPTS, of sub-frame 1; and/or
   a part or all of other REs than REs where CRS ports 0 to 3 are located, in specific symbols of sub-frame 6;
   wherein the specific symbols are symbols in the sub-frame 6, indices of which are the same as indices of the symbols in which the PBCH with enhanced coverage is transmitted, in the DwPTS of the sub-frame 1;
   or,
   wherein determining, by the network-side device, the resources, in the at least one radio frame, to which the PBCH with enhanced coverage is mapped comprises:
      determining, by the network-side device, the following resources in the at least one radio frame as the resources to which the PBCH with enhanced coverage is mapped:
      a part or all of other REs than REs where reserved Channel State Information-Reference Signals, CSI-RSs, are located, and REs where CRS ports 0 to 3 are located, in a part or all of other symbols than symbols occupied by legacy PBCH, SSSs, and PDCCHs, in sub-frame 9; and/or
      a part or all of other REs than REs where CRS ports 0 to 3 are located, in a part or all of other symbols than symbols occupied by PSSs and PDCCHs, in a DwPTS of sub-frame 1; and/or
      a part or all of other REs than REs where CRS ports 0 to 3 are located, in specific symbols of sub-frame 6;
      wherein the specific symbols are symbols in the sub-frame 6, indices of which are the same as indices of the symbols in which the PBCH with enhanced coverage is transmitted, in the DwPTS of the sub-frame 1;
      or,
      wherein determining, by the network-side device, the resources, in the at least one radio frame, to which the PBCH with enhanced coverage is mapped comprises:
         determining, by the network-side device, the following resources in the at least one radio frame as the resources to which the PBCH with enhanced coverage is mapped:
         a part or all of other REs than REs where CRS ports 0 to 3 are located, in a part or all of symbols where CRS ports are located, in a part or all of other symbols than symbols occupied by legacy PBCH, and PDCCHs, in a part or all of sub-frame 0, sub-frame 5, and sub-frame 9; and/or
         a part or all of other REs than REs where CRS ports 0 to 3 are located, in a part or all of other symbols than symbols occupied by PSSs and PDCCHs, in a DwPTS of sub-frame 1; and/or
         a part or all of other REs than REs where CRS ports 0 to 3 are located, in specific symbols of sub-frame 6;
wherein the specific symbols are symbols in the sub-frame 6, indices of which are the same as indices of the symbols in which the PBCH with enhanced coverage is transmitted, in the DwPTS of the sub-frame 1.

The network-side device according to embodiments of the invention determines resources, in at least one radio frame, to which the PBCH with enhanced coverage is mapped, and transmits the PBCH with enhanced coverage over the resources determined. The resources over which the PBCH with enhanced coverage is carried can be determined to thereby transmit the PBCH with enhanced coverage so as to improve the performance of a system.

Preferably the resources, in the at least one radio frame, to which the PBCH with enhanced coverage is mapped, are located on N sub-carriers around the center of a system bandwidth of the radio frame, where N represents a positive integer.

Preferably N is 72.

An embodiment of the invention provides another method for receiving a PBCH, the method including:
determining, by a user equipment, resources, in at least one radio frame, to which the PBCH with enhanced coverage is mapped; and
receiving, by the user equipment, the PBCH with enhanced coverage over the determined resources;
wherein determining, by the user equipment, the resources, in the at least one radio frame, to which the PBCH with enhanced coverage is mapped comprises:
determining, by the user equipment, the following resources in the at least one radio frame as the resources to which the PBCH with enhanced coverage is mapped:
a part or all of other Resource Elements, REs, than REs where Cell-specific Reference Signal, CRS ports 0 to 3 are located, in a part or all of other symbols than symbols occupied by legacy PBCH, Secondary Synchronization Signals, SSSs, and Physical Downlink Control Channels, PDCCHs, in sub-frame 9; and/or
a part or all of other REs than REs where CRS ports 0 to 3 are located, in a part or all of other symbols than symbols occupied by Primary Synchronization Signals, PSSs, and PDCCHs, in a Downlink Pilot Time Slot, DwPTS, of sub-frame 1; and/or
a part or all of other REs than REs where CRS ports 0 to 3 are located, in specific symbols of sub-frame 6;
wherein the specific symbols are symbols in the sub-frame 6, indices of which are the same as indices of the symbols in which the PBCH with enhanced coverage is transmitted, in the DwPTS of the sub-frame 1;
or,
wherein determining, by the user equipment, the resources, in the at least one radio frame, to which the PBCH with enhanced coverage is mapped comprises:
determining, by the user equipment, the following resources in the at least one radio frame as the resources to which the PBCH with enhanced coverage is mapped:
a part or all of other REs than REs where reserved Channel State Information-Reference Signals, CSI-RSs, are located, and REs where CRS ports 0 to 3 are located, in a part or all of other symbols than symbols occupied by legacy PBCH, SSSs, and PDCCHs, in sub-frame 9; and/or
a part or all of other REs than REs where CRS ports 0 to 3 are located, in a part or all of other symbols than symbols occupied by PSSs and PDCCHs, in a DwPTS of sub-frame 1; and/or
a part or all of other REs than REs where CRS ports 0 to 3 are located, in specific symbols of sub-frame 6;
wherein the specific symbols are symbols in the sub-frame 6, indices of which are the same as indices of the symbols in which the PBCH with enhanced coverage is transmitted, in the DwPTS of the sub-frame 1;
or,
wherein determining, by the user equipment, the resources, in the at least one radio frame, to which the PBCH with enhanced coverage is mapped comprises:
   determining, by the user equipment, the following resources in the at least one radio frame as the resources to which the PBCH with enhanced coverage is mapped:
   a part or all of other REs than REs where CRS ports 0 to 3 are located, in a part or all of symbols where CRS ports are located, in a part or all of other symbols than symbols occupied by legacy PBCH, and PDCCHs, in a part or all of sub-frame 0, sub-frame 5, and sub-frame 9; and/or
   a part or all of other REs than REs where CRS ports 0 to 3 are located, in a part or all of other symbols than symbols occupied by PSSs and PDCCHs, in a DwPTS of sub-frame 1; and/or
   a part or all of other REs than REs where CRS ports 0 to 3 are located, in specific symbols of sub-frame 6;
   wherein the specific symbols are symbols in the sub-frame 6, indices of which are the same as indices of the symbols in which the PBCH with enhanced coverage is transmitted, in the DwPTS of the sub-frame 1.

Preferably the resources, in the at least one radio frame, to which the PBCH with enhanced coverage is mapped, are located on N sub-carriers around the center of a system bandwidth of the radio frame, where N represents a positive integer.

Preferably N is 72.

An embodiment of the invention provides a network-side device for transmitting a PBCH, the network-side device including:
a first determining module configured to determine, resources, in at least one radio frame, to which a PBCH with enhanced coverage is mapped; and
a transmitting module configured to transmit the PBCH with enhanced coverage over the resources determined;
wherein the first determining module is configured to determine the following resources in the at least one radio frame as the resources to which the PBCH with enhanced coverage is mapped:
a part or all of other Resource Elements, REs, than REs where Cell-specific Reference Signal, CRS, ports 0 to 3 are located, in a part or all of other symbols than symbols occupied by legacy PBCH, Secondary Synchronization Signals, SSSs, and Physical Downlink Control Channels, PDCCHs, in sub-frame 9; and/or
a part or all of other REs than REs where CRS ports 0 to 3 are located, in a part or all of other symbols than symbols occupied by Primary Synchronization Signals, PSSs, and PDCCHs, in a Downlink Pilot Time Slot, DwPTS, of sub-frame 1; and/or
a part or all of other REs than REs where CRS ports 0 to 3 are located, in specific symbols of sub-frame 6;
wherein the specific symbols are symbols in the sub-frame 6, indices of which are the same as indices of the symbols in which the PBCH with enhanced coverage is transmitted, in the DwPTS of the sub-frame 1;
or,
wherein the first determining module is configured to determine the following resources in the at least one radio frame as the resources to which the PBCH with enhanced coverage is mapped:
   a part or all of other REs than REs where reserved Channel State Information-Reference Signals, CSI-RSs, are located, and REs where CRS ports 0 to 3 are located, in a part or all of other symbols than symbols occupied by legacy PBCH, SSSs, and PDCCHs, in sub-frame 9; and/or
   a part or all of other REs than REs where CRS ports 0 to 3 are located, in a part or all of other symbols than symbols occupied by PSSs and PDCCHs, in a DwPTS of sub-frame 1; and/or
   a part or all of other REs than REs where CRS ports 0 to 3 are located, in specific symbols of sub-frame 6;
   wherein the specific symbols are symbols in the sub-frame 6, indices of which are the same as indices of the symbols in which the PBCH with enhanced coverage is transmitted, in the DwPTS of the sub-frame 1;
   or,
   wherein the first determining module is configured to determine the following resources in the at least one radio frame as the resources to which the PBCH with enhanced coverage is mapped:
      a part or all of other REs than REs where CRS ports 0 to 3 are located, in a part or all of symbols where CRS ports are located, in a part or all of other symbols than symbols occupied by legacy PBCH, and PDCCHs, in a part or all of sub-frame 0, sub-frame 5, and sub-frame 9; and/or
      a part or all of other REs than REs where CRS ports 0 to 3 are located, in a part or all of other symbols than symbols occupied by PSSs and PDCCHs, in a DwPTS of sub-frame 1; and/or
      a part or all of other REs than REs where CRS ports 0 to 3 are located, in specific symbols of sub-frame 6;
      wherein the specific symbols are symbols in the sub-frame 6, indices of which are the same as indices of the symbols in which the PBCH with enhanced coverage is transmitted, in the DwPTS of the sub-frame 1.

The network-side device according to embodiments of the invention determines resources, in at least one radio frame, to which the PBCH with enhanced coverage is mapped, and transmits the PBCH with enhanced coverage over the determined resources. The resources over which the PBCH with enhanced coverage is carried can be determined to thereby transmit the PBCH with enhanced coverage so as to improve the performance of a system.

Preferably the resources, in the at least one radio frame, to which the PBCH with enhanced coverage is mapped, are located on N sub-carriers around the center of a system bandwidth of the radio frame, where N represents a positive integer.

An embodiment of the invention provides a user equipment for receiving a PBCH, the user equipment including:
a second determining module configured to determine resources, in at least one radio frame, to which a PBCH with enhanced coverage is mapped; and
a receiving module configured to receive the PBCH with enhanced coverage over the resources determined;
wherein the second determining module is configured to determine the following resources in the at least one radio frame as the resources to which the PBCH with enhanced coverage is mapped:
a part or all of other Resource Elements, REs, than REs where Cell-specific Reference Signal, CRS, ports 0 to 3 are located, in a part or all of other symbols than symbols occupied by legacy PBCH, Secondary Synchronization Signals, SSSs, and Physical Downlink Control Channels, PDCCHs, in sub-frame 9; and/or
a part or all of other REs than REs where CRS ports 0 to 3 are located, in a part or all of other symbols than symbols occupied by Primary Synchronization Signals, PSSs, and PDCCHs, in a Downlink Pilot Time Slot, DwPTS, of sub-frame 1; and/or
a part or all of other REs than REs where CRS ports 0 to 3 are located, in specific symbols of sub-frame 6;
wherein the specific symbols are symbols in the sub-frame 6, indices of which are the same as indices of the symbols in which the PBCH with enhanced coverage is transmitted, in the DwPTS of the sub-frame 1.
wherein the second determining module is configured to determine the following resources in the at least one radio frame as the resources to which the PBCH with enhanced coverage is mapped:
   a part or all of other REs than REs where reserved Channel State Information-Reference Signals, CSI-RSs, are located, and REs where CRS ports 0 to 3 are located, in a part or all of other symbols than symbols occupied by legacy PBCH, SSSs, and PDCCHs, in sub-frame 9; and/or
   a part or all of other REs than REs where CRS ports 0 to 3 are located, in a part or all of other symbols than symbols occupied by PSSs and PDCCHs, in a DwPTS of sub-frame 1; and/or
   a part or all of other REs than REs where CRS ports 0 to 3 are located, in specific symbols of sub-frame 6;
   wherein the specific symbols are symbols in the sub-frame 6, indices of which are the same as indices of the symbols in which the PBCH with enhanced coverage is transmitted, in the DwPTS of the sub-frame 1;
   wherein the second determining module is configured to determine the following resources in the at least one radio frame as the resources to which the PBCH with enhanced coverage is mapped:
      a part or all of other REs than REs where CRS ports 0 to 3 are located, in a part or all of symbols where CRS ports are located, in a part or all of other symbols than symbols occupied by legacy PBCH, and PDCCHs, in a part or all of sub-frame 0, sub-frame 5, and sub-frame 9; and/or
      a part or all of other REs than REs where CRS ports 0 to 3 are located, in a part or all of other symbols than symbols occupied by PSSs and PDCCHs, in a DwPTS of sub-frame 1; and/or
      a part or all of other REs than REs where CRS ports 0 to 3 are located, in specific symbols of sub-frame 6;
      wherein the specific symbols are symbols in the sub-frame 6, indices of which are the same as indices of the symbols in which the PBCH with enhanced coverage is transmitted, in the DwPTS of the sub-frame 1.

Preferably the resources, in the at least one radio frame, to which the PBCH with enhanced coverage is mapped, are located on N sub-carriers around the center of a system bandwidth of the radio frame, where N represents a positive integer.

An embodiment of the invention provides a system for transmitting a PBCH, the system including:
a network-side device configured to determine resources, in at least one radio frame, to which a PBCH with enhanced coverage is mapped; and to transmit the PBCH with enhanced coverage over the resources determined; and
a user equipment configured to determine the resources, in at least one radio frame, to which the PBCH with enhanced coverage is mapped; and to receive the PBCHs with enhanced coverage over the resources determined.

The network-side device according to embodiments of the invention determines resources, in at least one radio frame, to which the PBCH with enhanced coverage is mapped, and transmits the PBCH with enhanced coverage over the resources determined. The resources over which the PBCH with enhanced coverage is carried can be determined to thereby transmit the PBCH with enhanced coverage so as to improve the performance of a system.

### Brief Description of the Drawings

Fig.1 is a schematic structural diagram of a system for transmitting a PBCH according to an embodiment of the invention;
Fig.2 is a schematic diagram of first resource mapping according to an embodiment of the invention;
Fig.3 is a schematic diagram of second resource mapping according to an embodiment of the invention;
Fig.4 is a schematic diagram of third resource mapping according to an embodiment of the invention;
Fig.5 is a schematic diagram of fourth resource mapping according to an embodiment of the invention;
   a part or all of other REs than REs where CRS ports 0 to 3 are located, in specific symbols of sub-frame 6;
   wherein the specific symbols are symbols in the sub-frame 6, indices of which are the same as indices of the symbols in which the PBCH with enhanced coverage is transmitted, in the DwPTS of the sub-frame 1.

Preferably the second determining module is configured:
to determine the following resources in the at least one radio frame as the resources to which the PBCH with enhanced coverage is mapped:
a part or all of other REs than REs where CRS ports 0 to 3 are located, in a part or all of symbols where CRS ports are located, in a part or all of other symbols than symbols occupied by legacy PBCH, and PDCCHs, in a part or all of sub-frame 0, sub-frame 5, and sub-frame 9; and/or
a part or all of other REs than REs where CRS ports 0 to 3 are located, in a part or all of other symbols than symbols occupied by PSSs and PDCCHs, in a DwPTS of sub-frame 1; and/or
a part or all of other REs than REs where CRS ports 0 to 3 are located, in specific symbols of sub-frame 6;
wherein the specific symbols are symbols in the sub-frame 6, indices of which are the same as indices of the symbols in which the PBCH with enhanced coverage is transmitted, in the DwPTS of the sub-frame 1.

Preferably the second determining module is configured:
to determine the following resources in the at least one radio frame as the resources to which the PBCH with enhanced coverage is mapped:
a part or all of other REs than REs where CRS ports 0 to 3 are located, in a part or all of other symbols than symbols occupied by legacy PBCH, SSSs, and CSI-RSs, in a part or all of sub-frame 0, sub-frame 5, and sub-frame 9; and/or
a part or all of other REs than REs where CRS ports 0 to 3 are located, in a part or all of other symbols than symbols occupied by PSSs and PDCCHs, in a DwPTS of sub-frame 1; and/or
a part or all of other REs than REs where CRS ports 0 to 3 are located, in specific symbols of sub-frame 6;
wherein the specific symbols are symbols in the sub-frame 6, indices of which are d the same as indices of the symbols in which the PBCH with enhanced coverage is transmitted, in the DwPTS of the sub-frame 1.

Preferably the resources, in the at least one radio frame, to which the PBCH with enhanced coverage is mapped, are located on N sub-carriers around the center of a system bandwidth of the radio frame, where N represents a positive integer.

An embodiment of the invention provides another user equipment for receiving a PBCH, the user equipment including:
a processor configured to determine, resources, in at least one radio frame, to which a PBCH with enhanced coverage is mapped, and to receive the PBCH with enhanced coverage over the resources determined through a transceiver; and
the transceiver configured to be controlled by the processor to transmit and receive data.

Preferably the processor is configured:
to determine the following resources in the at least one radio frame as the resources to which the PBCH with enhanced coverage is mapped:
a part or all of other REs than REs where CRS ports 0 to 3 are located, in a part or all of other symbols than symbols occupied by legacy PBCH, SSSs, and PDCCHs, in a part or all of sub-frame 0, sub-frame 5, and sub-frame 9; and/or
a part or all of other REs than REs where CRS ports 0 to 3 are located, in a part or all of other symbols than symbols occupied by PSSs, and PDCCHs, in a DwPTS of sub-frame 1; and/or
a part or all of other REs than REs where CRS ports 0 to 3 are located, in specific symbols of sub-frame 6;
wherein the specific symbols are symbols in the sub-frame 6, indices of which are the same as indices of the symbols in which the PBCH with enhanced coverage is transmitted, in the DwPTS of the sub-frame 1.

Preferably the processor is configured:
to determine the following resources in the at least one radio frame as the resources to which the PBCH with enhanced coverage is mapped:
a part or all of other REs than REs where reserved CSI-RSs are located, and REs where CRS ports 0 to 3 are located, in a part or all of other symbols than symbols occupied by legacy PBCH, SSSs, and PDCCHs, in a part or all of sub-frame 0, sub-frame 5, and sub-frame 9; and/or
a part or all of other REs than REs where CRS ports 0 to 3 are located, in a part or all of other symbols than symbols occupied by PSSs and PDCCHs, in a DwPTS of sub-frame 1; and/or
a part or all of other REs than REs where CRS ports 0 to 3 are located, in specific symbols of sub-frame 6;
wherein the specific symbols are symbols in the sub-frame 6, indices of which are the same as indices of the symbols in which the PBCH with enhanced coverage is transmitted, in the DwPTS of the sub-frame 1.

Preferably the processor is configured:
to determine the following resources in the at least one radio frame as the resources to which the PBCH with enhanced coverage is mapped:
a part or all of other REs than REs where CRS ports 0 to 3 are located, in a part or all of symbols where CRS ports are located, in a part or all of other symbols than symbols occupied by legacy PBCH, and PDCCHs, in a part or all of sub-frame 0, sub-frame 5, and sub-frame 9; and/or
a part or all of other REs than REs where CRS ports 0 to 3 are located, in a part or all of other symbols than symbols occupied by PSSs and PDCCHs, in a DwPTS of sub-frame 1; and/or
a part or all of other REs than REs where CRS ports 0 to 3 are located, in specific symbols of sub-frame 6;
wherein the specific symbols are symbols in the sub-frame 6, indices of which are the same as indices of the symbols in which the PBCH with enhanced coverage is transmitted, in the DwPTS of the sub-frame 1.

Preferably the processor is configured:
to determine the following resources in the at least one radio frame as the resources to which the PBCH with enhanced coverage is mapped:
a part or all of other REs than REs where CRS ports 0 to 3 are located, in a part or all of other symbols than symbols occupied by legacy PBCH, SSSs, and CSI-RSs, in a part or all of sub-frame 0, sub-frame 5, and sub-frame 9; and/or
a part or all of other REs than REs where CRS ports 0 to 3 are located, in a part or all of other symbols than symbols occupied by PSSs and PDCCHs, in a DwPTS of sub-frame 1; and/or
a part or all of other REs than REs where CRS ports 0 to 3 are located, in specific symbols of sub-frame 6;
wherein the specific symbols are symbols in the sub-frame 6, indices of which are the same as indices of the symbols in which the PBCH with enhanced coverage is transmitted, in the DwPTS of the sub-frame 1.

Preferably the resources, in the at least one radio frame, to which the PBCH with enhanced coverage is mapped, are located on N sub-carriers around the center of a system bandwidth of the radio frame, where N represents a positive integer.

An embodiment of the invention provides a system for transmitting a PBCH, the system including:
a network-side device configured to determine resources, in at least one radio frame, to which a PBCH with enhanced coverage is mapped; and to transmit the PBCH with enhanced coverage over the resources determined; and
a user equipment configured to determine the resources, in at least one radio frame, to which the PBCH with enhanced coverage is mapped; and to receive the PBCHs with enhanced coverage over the resources determined.

The network-side device according to embodiments of the invention determines resources, in at least one radio frame, to which the PBCH with enhanced coverage is mapped, and transmits the PBCH with enhanced coverage over the resources determined. The resources over which the PBCH with enhanced coverage is carried can be determined to thereby transmit the PBCH with enhanced coverage so as to improve the performance of a system.

### Brief Description of the Drawings

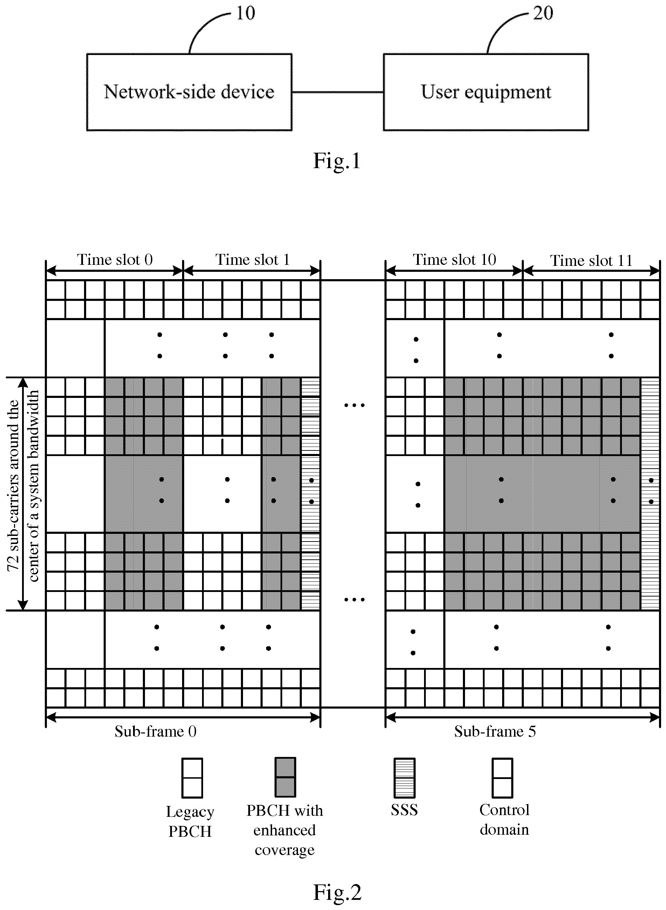

Fig.1 is a schematic structural diagram of a system for transmitting a PBCH according to an embodiment of the invention;
Fig.2 is a schematic diagram of first resource mapping according to an embodiment of the invention;

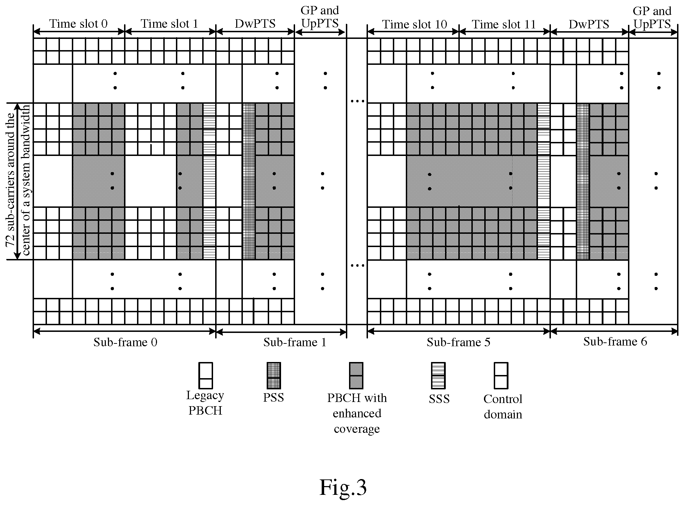

Fig.3 is a schematic diagram of second resource mapping according to an embodiment of the invention;

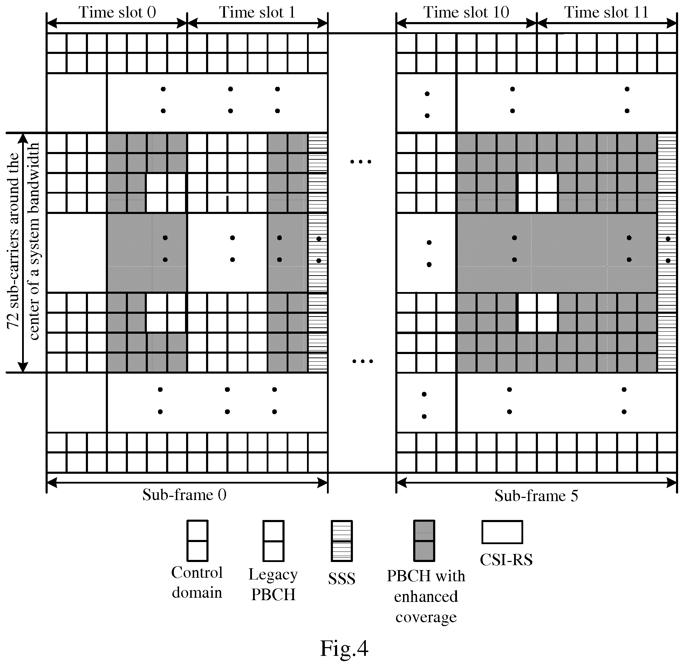

Fig.4 is a schematic diagram of third resource mapping according to an embodiment of the invention;

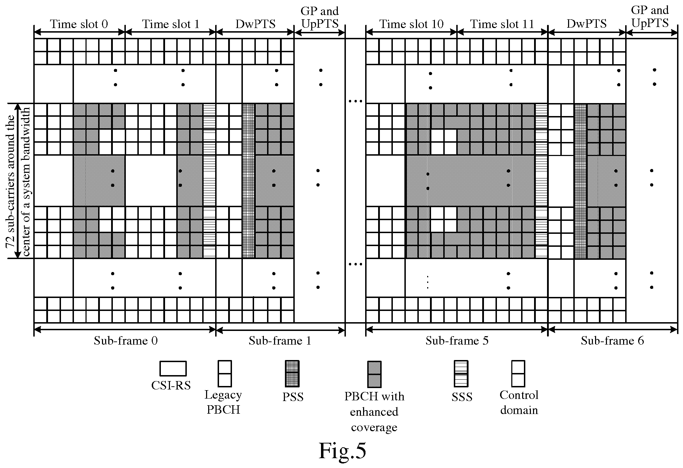

Fig.5 is a schematic diagram of fourth resource mapping according to an embodiment of the invention;

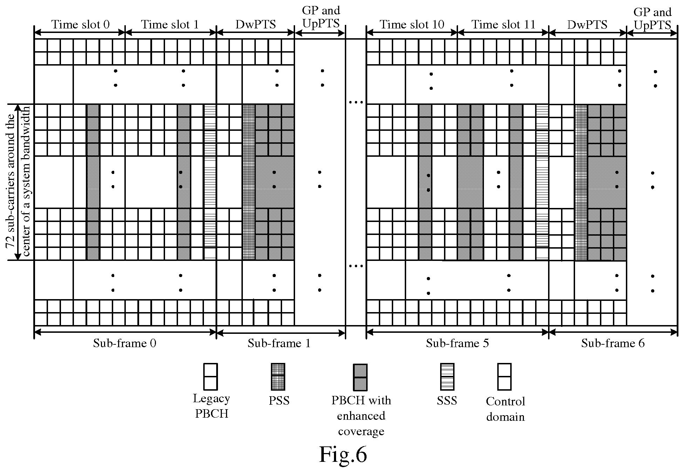

Fig.6 is a schematic diagram of fifth resource mapping according to an embodiment of the invention;

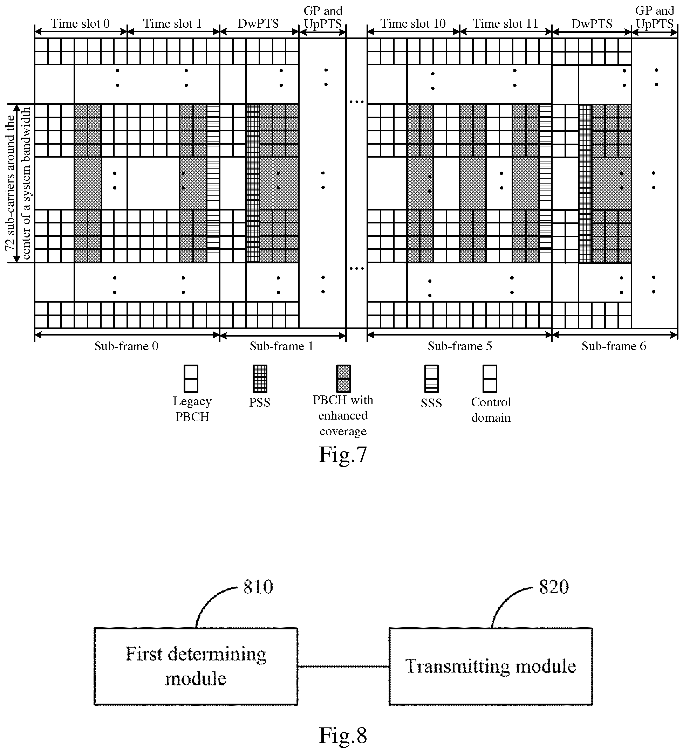

Fig.7 is a schematic diagram of sixth resource mapping according to an embodiment of the invention;
Fig.8 is a schematic structural diagram of a first network-side device in the system for transmitting a PBCH according to an embodiment of the invention;

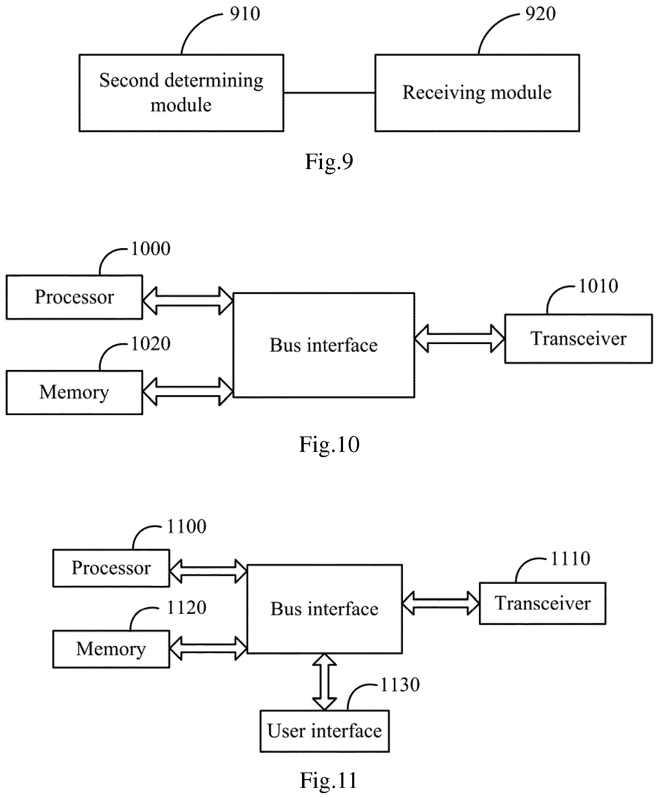

Fig.9 is a schematic structural diagram of a first user equipment in the system for transmitting a PBCH according to an embodiment of the invention;
Fig.10 is a schematic structural diagram of a second network-side device in the system for transmitting a PBCH according to an embodiment of the invention;
Fig.11 is a schematic structural diagram of a second user equipment in the system for transmitting a PBCH according to an embodiment of the invention;

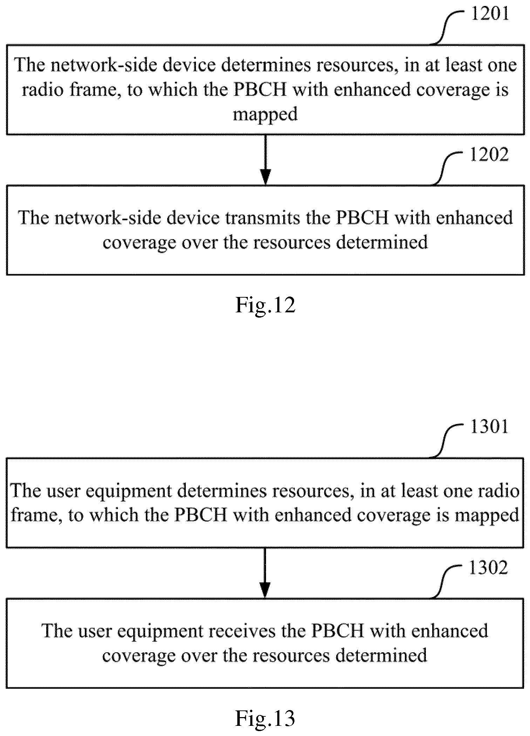

Fig.12 is a schematic flow chart of a method for transmitting a PBCH by a network-side device according to an embodiment of the invention; and
Fig.13 is a schematic flow chart of a method for receiving a PBCH by a user equipment according to an embodiment of the invention.

### Detailed Description of the Embodiments

A network-side device according to embodiments of the invention determines resources, in at least one radio frame, to which a PBCH with enhanced coverage is mapped, and transmits the PBCH with enhanced coverage over the resources determined. The resources over which the PBCH with enhanced coverage is carried can be determined to thereby transmit the PBCH with enhanced coverage so as to improve the performance of a system.

The embodiments of the invention will be described below in further details with reference to the drawings.

As illustrated in Fig.1, a system for transmitting a PBCH according to an embodiment of the invention includes:

A network-side device 10 is configured to determine resources, in at least one radio frame, to which a PBCH with enhanced coverage is mapped; and to transmit PBCHs with enhanced coverage over the resources determined.

A user equipment 20 is configured to determine the resources, in at least one radio frame, to which the PBCH with enhanced coverage is mapped; and to receive the PBCH with enhanced coverage over the resources determined.

In an implementation, the particular number of radio frames including the resources to which the PBCH with enhanced coverage is mapped can be specified in a specification, or notified by a higher layer to a base station and the user equipment, or determined by the base station and then notified to the user equipment, as needed.

For example, the number of radio frames including the resources to which the PBCH with enhanced coverage is mapped can be 4, 8, 12, etc. If there are multiple radio frames, then all of these radio frames can be consecutive, or a part of them can be consecutive, or all of them can be inconsecutive.

Preferably the resources, in the at least one radio frame, to which the PBCH with enhanced coverage is mapped, are located on N sub-carriers around the center of the system bandwidth of the radio frame, where N represents a positive integer.

Since there are 72 sub-carriers occupied by the existing PBCH, i.e., the largest number of sub-carriers in the system with a bandwidth of 1.4 MHz, preferably N can be 72 in an implementation. Of course, N can alternatively be another number.

For a radio frame, there may be numerous resources to which the PBCH with enhanced coverage is mapped, and several of them will be listed below.

In a first arrangement, the resources are a part or all of other Resource Elements (REs) than REs where Cell-specific Reference Signal (CRS) ports 0 to 3 are located, in a part or all of other symbols than symbols occupied by legacy PBCH, Secondary Synchronization Signals (SSSs), and Physical Downlink Control Channels (PDCCHs), in a part or all of sub-frame 0, sub-frame 5, and sub-frame 9; and/or

A part or all of other REs than REs where CRS ports 0 to 3 are located, in a part or all of other symbols than symbols occupied by Primary Synchronization Signals (PSSs), and PDCCHs, in a Downlink Pilot Time Slot (DwPTS) of sub-frame 1; and/or

A part or all of other REs than REs where CRS ports 0 to 3 are located, in specific symbols of sub-frame 6;

Here the specific symbols are symbols in the sub-frame 6, indices of which are the same as indices of the symbols in which the PBCH with enhanced coverage is transmitted in the DwPTS of the sub-frame 1.

In a second arrangement, the resources are a part or all of other REs than REs where reserved Channel State Information-Reference Signals (CSI-RSs) are located, and REs where CRS ports 0 to 3 are located, in a part or all of other symbols than symbols occupied by legacy PBCH, SSSs, and PDCCHs, in a part or all of sub-frame 0, sub-frame 5, and sub-frame 9; and/or

A part or all of other REs than REs where CRS ports 0 to 3 are located, in a part or all of other symbols than symbols occupied by PSSs and PDCCHs, in a DwPTS of sub-frame 1; and/or

A part or all of other REs than REs where CRS ports 0 to 3 are located, in specific symbols of sub-frame 6;

Here the specific symbols are symbols in the sub-frame 6, indices of which are the same as indices of the symbols in which the PBCH with enhanced coverage is transmitted, in the DwPTS of the sub-frame 1.

In a third arrangement, the resources are a part or all of other REs than REs where CRS ports 0 to 3 are located, in a part or all of symbols where CRS ports are located, in a part or all of other symbols than symbols occupied by legacy PBCH, and PDCCHs, in a part or all of sub-frame 0, sub-frame 5, and sub-frame 9; and/or

A part or all of other REs than REs where CRS ports 0 to 3 are located, in a part or all of other symbols than symbols occupied by PSSs and PDCCHs, in a DwPTS of sub-frame 1; and/or

A part or all of other REs than REs where CRS ports 0 to 3 are located, in specific symbols of sub-frame 6;

Here the specific symbols are symbols in the sub-frame 6, indices of which are the same as indices of the symbols in which the PBCH with enhanced coverage is transmitted, in the DwPTS of the sub-frame 1.

In a fourth arrangement, the resources are a part or all of other REs than REs where CRS ports 0 to 3 are located, in a part or all of other symbols than symbols occupied by legacy PBCH, SSSs, and CSI-RSs, in a part or all of sub-frame 0, sub-frame 5, and sub-frame 9; and/or

A part or all of other REs than REs where CRS ports 0 to 3 are located, in a part or all of other symbols than symbols occupied by PSSs and PDCCHs, in a DwPTS of sub-frame 1; and/or

A part or all of other REs than REs where CRS ports 0 to 3 are located, in specific symbols of sub-frame 6;

Here the specific symbols are symbols in the sub-frame 6, indices of which are the same as indices of the symbols in which the PBCH with enhanced coverage is transmitted, in the DwPTS of the sub-frame 1.

In the first arrangement to the fourth arrangement, the legacy PBCH is the PBCH specified in the 3GPP TS 36.211 Release 8. The PBCH with enhanced coverage according to the embodiment of the invention is PBCH with enhanced coverage relative to the legacy PBCH. The PBCH with enhanced coverage occupies more resources than those occupied by the legacy PBCH. Signal of the PBCH with enhanced coverage is generated by attaching a Cyclic Redundancy Check (CRC) to, convolutional encoding, rate-matching, scrambling, Quaternary Phase Shift Keying (QPSK)-modulation, pre-coding, layer-mapping, etc., source information bits carried in the signals on the PBCHs with enhanced coverage to obtain a sequence of PBCH complex-value signals for enhanced coverage.

In an implementation, those particular sub-frames can be specified in the specification.

For example, if the sub-frame 0 and the sub-frame 5 are specified for transmission, then the network-side device can transmit the PBCH with enhanced coverage in the sub-frame 0 and the sub-frame 5; and the user equipment needs to detect the PBCH with enhanced coverage, in the sub-frame 0 and the sub-frame 5, as specified in the specification. Particularly the user equipment can attempt to detect the PBCH with enhanced coverage according to the particular mapping arrangement of the PBCH resources, respectively based only upon a signal received in the sub-frame 0 or only upon a signal received in the sub-frame 5 or upon the signals received in the sub-frame 0 and the sub-frame 5 as long as resources of the PBCH with enhanced coverage is detected in any one of the three schemes, where if resources to which the PBCH with enhanced coverage is mapped, are detected correctly in the sub-frame 0 alone, then resources to which the PBCH with enhanced coverage is mapped will not be detected in the other sub-frame. If resources to which the PBCH with enhanced coverage is mapped, are not detected correctly in the sub-frame 0 alone, then resources to which the PBCH with enhanced coverage is mapped can be further detected combining with a part of the sub-frame 5 until resources of the PBCH with enhanced coverage are detected correctly.

In another example, if the sub-frame 0, the sub-frame 5, the sub-frame 1, and the sub-frame 6 are specified for transmission, then the network-side device can transmit the PBCHs with enhanced coverage only in the sub-frame 0 and the sub-frame 5, and/or the sub-frame 1 and the sub-frame 6; and particularly if special sub-frames are configured with special sub-frame configuration 0 and the special sub-frame configuration 5, since there are three symbols in the DwPTS, then there will be no additional symbols in which the PBCH with enhanced coverage can be transmitted, so the indices of the symbols in the DwPTS, to which the PBCH with enhanced coverage is mapped, are absent in the special sub-frame with the above special sub-frame configurations (that is, there will be no additional symbols in which the PBCH with enhanced coverage is transmitted), then the network-side device will not transmit the PBCH with enhanced coverage in the DwPTS even if the DwPTS is specified for transmission of the PBCH with enhanced coverage. At this time since the user equipment has no knowledge of the particular configuration of the special sub-frames at the network side, the user equipment will not know whether the PBCH is mapped in the sub-frames 1 and 6, and thus will attempt to detect resources to which the PBCH with enhanced coverage is mapped, assuming that the PBCH with enhanced coverage is transmitted only in the sub-frame 0 and the sub-frame 5, and that the PBCH with enhanced coverage is transmitted in both the sub-frames 0 and 5, and the sub-frames 1 and 6, respectively as long as resources to which the PBCH with enhanced coverage is mapped, are detected with either of the assumptions, where if resources to which the PBCH with enhanced coverage is mapped, are detected correctly in the sub-frame 0 alone, then resources to which the PBCH with enhanced coverage is mapped will not be detected correctly in the other sub-frame. If resources to which the PBCH with enhanced coverage is mapped, are not detected correctly in the sub-frame 0 alone, then resources to which the PBCH with enhanced coverage is mapped can be further detected combining with a part of the sub-frame 5; and furthermore if resources to which the PBCH with enhanced coverage is mapped, are not detected correctly in the sub-frames 0 and 5, then resources to which the PBCH with enhanced coverage is mapped can be further detected in the sub-frame 1 and the sub-frame 6 until resources to which the PBCH with enhanced coverage is mapped, are detected correctly.

Those particular resources, in the respective sub-frames, to which the PBCH with enhanced coverage is mapped, can be specified in the specification to thereby ensure the network-side device to be consistent with the user equipment.

Since there are three symbols in the DwPTS, then there will be no additional symbols in which the PBCH with enhanced coverage can be transmitted, so the indices of the symbols in the DwPTS, to which the PBCH with enhanced coverage is mapped, are absent (that is, there are no additional symbols in which the PBCH with enhanced coverage is transmitted) in the special sub-frame with the above special sub-frame configuration, then the network-side device will not transmit the PBCH with enhanced coverage in the DwPTS even if the DwPTS is specified for transmission of the PBCH with enhanced coverage.

In the example above, the PBCH with enhanced coverage is carried in the reserved CSI-RS REs or symbols in the embodiment of the invention to thereby lower the probability that PBCH being retransmitted collide with CSI-RSs so as to achieve an advantage of good compatibility with a legacy UE.

Several examples of resources, in a radio frame, to which the PBCH with enhanced coverage can be mapped, will be listed below.

The embodiment of this method will be described below taking a normal Cyclic Prefix (CP) as an example, but the description of the normal CP will equally apply to an extended CP, so a repeated description thereof will be omitted here. For the sake of brevity and analogy, only the examples of transmitting PBCH in the sub-frames 0, 1, 5 and 6 will be listed below, but transmission of the PBCH with enhanced coverage in sub-frame 9 will not be exemplified.

In a first example, the PBCH with enhanced coverage is mapped onto other REs than REs where CRS ports 0 to 3 are located, in other symbols than symbols occupied by legacy PBCH, SSSs, and PDCCHs, in the sub-frames 0 and 5.

As illustrated in Fig.2, the PBCH with enhanced coverage is mapped onto other REs than REs where CRS ports 0 to 3 are located, in 16 symbols including symbols 3, 4, 5 and 6 in a time slot 0, and symbols 4 and 5 in a time slot 1, in the sub-frame 0, and symbols 3, 4, 5 and 6 in a time slot 10, and symbols 0, 1, 2, 3, 4 and 5 in a time slot 11, in the sub-frame 5.

In a second example, PBCHs with enhanced coverage are mapped onto other REs than REs where CRS ports 0 to 3 are located, in other symbols than symbols occupied by legacy PBCH, PSSs, SSSs, and PDCCHs, in the sub-frames 0, 1, 5 and 6.

Since there are three symbols in the DwPTS, then there will be no addition symbols in which the PBCH with enhanced coverage is transmitted, so preferably this example can be applied to a special sub-frame configuration supporting six or more symbols in the DwPTS for a better effect.

As illustrated in Fig.3, in this example, the PBCH with enhanced coverage is mapped onto other REs than REs where CRS ports 0 to 3 are located, in 22 symbols including symbols 3, 4, 5 and 6 in a time slot 0, and symbols 4 and 5 in a time slot 1, in the sub-frame 0, symbols 3, 4 and 5 in the DwPTS in the sub-frame 1, symbols 3, 4, 5 and 6 in a time slot 10, and symbols 0, 1, 2, 3, 4 and 5 in a time slot 11, in the sub-frame 5, and symbols 3, 4 and 5 in the DwPTS in the sub-frame 6.

In an implementation, since there are three symbols in the DwPTS in the special sub-frame configurations 0 and 5, no PBCH will be mapped in the DwPTS in the sub-frame 1 and the sub-frame 6.

In a third example, the PBCH with enhanced coverage is mapped onto other REs than REs where CRS ports 0 to 3 and reserved CSI-RS ports are located, in other symbols than symbols occupied by legacy PBCH, SSSs, and PDCCHs, in the sub-frames 0 and 5.

As illustrated in Fig.4, the PBCH with enhanced coverage is mapped onto other REs than REs where CRS ports 0 to 3 and reserved CSI-RS ports are located, in 16 symbols including symbols 3, 4, 5 and 6 in a time slot 0, and symbols 4 and 5 in a time slot 1, in the sub-frame 0, and symbols 3, 4, 5 and 6 in a time slot 10, and symbols 0, 1, 2, 3, 4 and 5 in a time slot 11, in the sub-frame 5.

In a fourth example, the PBCH with enhanced coverage is mapped onto other REs than REs where CRS ports 0 to 3 and reserved CSI-RS ports are located, in other symbols than symbols occupied by legacy PBCH, PSSs, SSSs, and PDCCHs, in the sub-frames 0, 1, 5 and 6.

If there are three symbols in the DwPTS, then there will be no addition symbols in which the PBCH with enhanced coverage is transmitted, so preferably this example can be applied to a special sub-frame configuration supporting six or more symbols in the DwPTS for a better effect.

As illustrated in Fig.3, in this example, the PBCH with enhanced coverage is mapped onto other REs than REs where CRS ports 0 to 3 and reserved CSI-RS ports are located, in 22 symbols including symbols 3, 4, 5 and 6 in a time slot 0, and symbols 4 and 5 in a time slot 1, in the sub-frame 0, symbols 3, 4 and 5 in the DwPTS in the sub-frame 1, symbols 3, 4, 5 and 6 in a time slot 10, and symbols 0, 1, 2, 3, 4 and 5 in a time slot 11, in the sub-frame 5, and symbols 3, 4 and 5 in the DwPTS in the sub-frame 6.

In an implementation, since there are three symbols in the DwPTS in the special sub-frame configurations 0 and 5, no PBCH will be mapped in the DwPTS in the sub-frame 1 and the sub-frame 6.

In a fifth example, the PBCH with enhanced coverage is mapped onto other REs than REs where CRS ports are located, in other symbols where CRS ports are located than symbols occupied by legacy PBCH, and PDCCHs, in the sub-frames 0 and 5, and other REs than REs where CRS ports 0 to 3 are located, in a part or all of other symbols than symbols occupied by PSSs and PDCCHs, in the sub-frames 1 and 6.

If there are three symbols in the DwPTS, then there will be no addition symbols in which the PBCH with enhanced coverage is transmitted, so preferably this example can be applied to a special sub-frame configuration supporting six or more symbols in the DwPTS for a better effect.

As illustrated in Fig.6, the PBCH with enhanced coverage is mapped onto other REs than REs where CRS ports 0 to 3 are located, in 12 symbols including a symbol 4 in a time slot 0, and symbol 4 in a time slot 1, in the sub-frame 0, symbols 3, 4 and 5 in the DwPTS in the sub-frame 1, a symbol 4 in a time slot 10, and symbols 0, 1 and 4 in a time slot 11, in the sub-frame 5, and symbols 3, 4 and 5 in the DwPTS in the sub-frame 6.

In an implementation, since there are three symbols in the DwPTS in the special sub-frame configurations 0 and 5, no PBCH will be mapped in the DwPTS in the sub-frame 1 and the sub-frame 6.

In a sixth example, the PBCH with enhanced coverage is mapped onto other REs than REs where CRS ports are located, in other symbols than symbols occupied by legacy PBCH, PDCCHs, SSSs, and CSI-RSs, in the sub-frames 0 and 5, and other REs than REs where CRS ports 0 to 3 are located, in a part or all of other symbols than symbols occupied by PSSs and PDCCHs, in the sub-frames 1 and 6.

Since there are three symbols in the DwPTS, then there will be no addition symbols in which the PBCH with enhanced coverage is transmitted, so preferably this example can be applied to a special sub-frame configuration supporting six or more symbols in the DwPTS for a better effect.

As illustrated in Fig.7, the PBCH with enhanced coverage is mapped onto other REs than REs where CRS ports 0 to 3 are located, in 18 symbols including symbols 3 and 4 in a time slot 0, and symbols 4 and 5in a time slot 1, in the sub-frame 0, symbols 3, 4 and 5 in the DwPTS in the sub-frame 1, symbols 3 and 4 in a time slot 10, and symbols 0, 1, 4 and 5 in a time slot 11, in the sub-frame 5, and symbols 3, 4 and 5 in the DwPTS in the sub-frame 6.

In an implementation, since there are three symbols in the DwPTS in the special sub-frame configurations 0 and 5, no PBCH will be mapped in the DwPTS in the sub-frame 1 and the sub-frame 6.

As illustrated in Fig.8, a first network-side device in the system for transmitting a PBCH according to an embodiment of the invention includes:
A first determining module 810 is configured to determine resources, in at least one radio frame, to which a PBCH with enhanced coverage is mapped; and
A transmitting module 820 is configured to transmit the PBCH with enhanced coverage over the resources determined.

Preferably the first determining module 810 is configured:
To determine the following resources in the at least one radio frame as the resources to which the PBCH with enhanced coverage is mapped:
A part or all of other REs than REs where CRS ports 0 to 3 are located, in a part or all of other symbols than symbols occupied by legacy PBCH, SSSs, and PDCCHs, in a part or all of sub-frame 0, sub-frame 5, and sub-frame 9; and/or
A part or all of other REs than REs where CRS ports 0 to 3 are located, in a part or all of other symbols than symbols occupied by PSSs, and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the first determining module 810 is configured:
To determine the following resources in the at least one radio frame as the resources to which the PBCH with enhanced coverage is mapped:
A part or all of other REs than REs where reserved CSI-RSs are located, and REs where CRS ports 0 to 3 are located, in a part or all of other symbols than symbols occupied by legacy PBCH, SSSs, and PDCCHs, in a part or all of sub-frame 0, sub-frame 5, and sub-frame 9; and/or
A part or all of other REs than REs where CRS ports 0 to 3 are located, in a part or all of other symbols than symbols occupied by PSSs and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the first determining module 810 is configured:
To determine the following resources in the at least one radio frame as the resources to which the PBCH with enhanced coverage is mapped:
A part or all of other REs than REs where CRS ports 0 to 3 are located, in a part or all of symbols where CRS ports are located, in a part or all of other symbols than symbols occupied by legacy PBCH, and PDCCHs, in a part or all of sub-frame 0, sub-frame 5, and sub-frame 9; and/or
A part or all of other REs than REs where CRS ports 0 to 3 are located, in a part or all of other symbols than symbols occupied by PSSs and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the first determining module 810 is configured:
To determine the following resources in the at least one radio frame as the resources to which the PBCH with enhanced coverage is mapped:
A part or all of other REs than REs where CRS ports 0 to 3 are located, in a part or all of other symbols than symbols occupied by legacy PBCH, SSSs, and CSI-RSs, in a part or all of sub-frame 0, sub-frame 5, and sub-frame 9; and/or
A part or all of other REs than REs where CRS ports 0 to 3 are located, in a part or all of other symbols than symbols occupied by PSSs and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the resources, in the at least one radio frame, to which the PBCH with enhanced coverage is mapped, are located on N sub-carriers around the center of a system bandwidth of the radio frame, where N represents a positive integer.

As illustrated in Fig.9, a first user equipment in the system for transmitting a PBCH according to an embodiment of the invention includes:
A second determining unit 910 is configured to determine resources, in at least one radio frame, to which a PBCH with enhanced coverage is mapped; and
A receiving module 920 is configured to receive the PBCH with enhanced coverage over the resources determined.

Preferably the second determining unit 910 is configured:
To determine the following resources in the at least one radio frame as the resources to which the PBCH with enhanced coverage is mapped:
A part or all of other REs than REs where CRS ports 0 to 3 are located, in a part or all of other symbols than symbols occupied by legacy PBCH, SSSs, and PDCCHs, in a part or all of sub-frame 0, sub-frame 5, and sub-frame 9; and/or
A part or all of other REs than REs where CRS ports 0 to 3 are located, in a part or all of other symbols than symbols occupied by PSSs, and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the second determining unit 910 is configured:
To determine the following resources in the at least one radio frame as the resources to which the PBCH with enhanced coverage is mapped:
A part or all of other REs than REs where reserved CSI-RSs are located, and REs where CRS ports 0 to 3 are located, in a part or all of other symbols than symbols occupied by legacy PBCH, SSSs, and PDCCHs, in a part or all of sub-frame 0, sub-frame 5, and sub-frame 9; and/or
A part or all of other REs than REs where CRS ports 0 to 3 are located, in a part or all of other symbols than symbols occupied by PSSs and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the second determining unit 910 is configured:
To determine the following resources in the at least one radio frame as the resources to which the PBCH with enhanced coverage is mapped:
A part or all of other REs than REs where CRS ports 0 to 3 are located, in a part or all of symbols where CRS ports are located, in a part or all of other symbols than symbols occupied by legacy PBCH, and PDCCHs, in a part or all of sub-frame 0, sub-frame 5, and sub-frame 9; and/or
A part or all of other REs than REs where CRS ports 0 to 3 are located, in a part or all of other symbols than symbols occupied by PSSs and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the second determining unit 910 is configured:
To determine the following resources in the at least one radio frame as the resources to which the PBCH with enhanced coverage is mapped:
A part or all of other REs than REs where CRS ports 0 to 3 are located, in a part or all of other symbols than symbols occupied by legacy PBCH, SSSs, and CSI-RSs, in a part or all of sub-frame 0, sub-frame 5, and sub-frame 9; and/or
A part or all of other REs than REs where CRS ports 0 to 3 are located, in a part or all of other symbols than symbols occupied by PSSs and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the resources, in the at least one radio frame, to which the PBCH with enhanced coverage is mapped, are located on N sub-carriers around the center of a system bandwidth of the radio frame, where N represents a positive integer.

As illustrated in Fig. 10, a second network-side device in the system for transmitting a PBCH according to an embodiment of the invention includes:
A processor 1000 is configured to determine resources, in at least one radio frame, to which a PBCH with enhanced coverage are mapped, and to transmit the PBCH with enhanced coverage over the resources determined through a transceiver 1010; and
The transceiver 1010 is configured to be controlled by the processor 1000 to transmit and receive data.

Preferably the processor 1000 is configured:
To determine the following resources in the at least one radio frame as the resources to which the PBCH with enhanced coverage is mapped:
A part or all of other REs than REs where CRS ports 0 to 3 are located, in a part or all of other symbols than symbols occupied by legacy PBCH, SSSs, and PDCCHs, in a part or all of sub-frame 0, sub-frame 5, and sub-frame 9; and/or
A part or all of other REs than REs where CRS ports 0 to 3 are located, in a part or all of other symbols than symbols occupied by PSSs, and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the processor 1000 is configured:
To determine the following resources in the at least one radio frame as the resources to which the PBCH with enhanced coverage is mapped:
A part or all of other REs than REs where reserved CSI-RSs are located, and REs where CRS ports 0 to 3 are located, in a part or all of other symbols than symbols occupied by legacy PBCH, SSSs, and PDCCHs, in a part or all of sub-frame 0, sub-frame 5, and sub-frame 9; and/or
A part or all of other REs than REs where CRS ports 0 to 3 are located, in a part or all of other symbols than symbols occupied by PSSs and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the processor 1000 is configured:
To determine the following resources in the at least one radio frame as the resources to which the PBCH with enhanced coverage is mapped:
A part or all of other REs than REs where CRS ports 0 to 3 are located, in a part or all of symbols where CRS ports are located, in a part or all of other symbols than symbols occupied by legacy PBCH, and PDCCHs, in a part or all of sub-frame 0, sub-frame 5, and sub-frame 9; and/or
A part or all of other REs than REs where CRS ports 0 to 3 are located, in a part or all of other symbols than symbols occupied by PSSs and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the processor 1000 is configured:
To determine the following resources in the at least one radio frame as the resources to which the PBCH with enhanced coverage is mapped:
A part or all of other REs than REs where CRS ports 0 to 3 are located, in a part or all of other symbols than symbols occupied by legacy PBCH, SSSs, and CSI-RSs, in a part or all of sub-frame 0, sub-frame 5, and sub-frame 9; and/or
A part or all of other REs than REs where CRS ports 0 to 3 are located, in a part or all of other symbols than symbols occupied by PSSs and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the resources, in the at least one radio frame, to which the PBCH with enhanced coverage is mapped, are located on N sub-carriers around the center of a system bandwidth of the radio frame, where N represents a positive integer.

Here in Fg.10, a bus architecture can include any number of interconnection buses and bridges which are particularly configured to link various circuits together including one or more processor represented by the processor 1000, and a memory represented by a memory 1020. The bus architecture can link various other circuits together, e.g., peripheral devices, a manostat, a power management circuit, etc., all of which are well known in the art, so a repeated description thereof will be omitted in this context. A bus interface provides an interface. The transceiver 1010 can include a plurality of elements including a transmitter and a receiver configured to provide elements communicating with other various apparatuses over a transmission medium. The processor 1000 is responsible for managing the bus architecture and common processes, and the memory 1020 can store data used by the processor 1000 in performing operations.

The processor 1000 is responsible for managing the bus architecture and common processes, and the memory 1020 can store data used by the processor 1000 in performing operations.

As illustrated in Fig.11, a second user equipment in the system for transmitting a PBCH according to an embodiment of the invention includes:
A processor 1100 is configured to determine resources, in at least one radio frame, to which a PBCH with enhanced coverage is mapped, and to receive the PBCH with enhanced coverage over the resources determined through a transceiver 1110; and
The transceiver 1110 is configured to be controlled by the processor 1100 to transmit and receive data.

Preferably the processor 1100 is configured:
To determine the following resources in the at least one radio frame as the resources to which the PBCH with enhanced coverage is mapped:
A part or all of other REs than REs where CRS ports 0 to 3 are located, in a part or all of other symbols than symbols occupied by legacy PBCH, SSSs, and PDCCHs, in a part or all of sub-frame 0, sub-frame 5, and sub-frame 9; and/or
A part or all of other REs than REs where CRS ports 0 to 3 are located, in a part or all of other symbols than symbols occupied by PSSs, and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the processor 1100 is configured:
To determine the following resources in the at least one radio frame as the resources to which the PBCH with enhanced coverage is mapped:
A part or all of other REs than REs where reserved CSI-RSs are located, and REs where CRS ports 0 to 3 are located, in a part or all of other symbols than symbols occupied by legacy PBCH, SSSs, and PDCCHs, in a part or all of sub-frame 0, sub-frame 5, and sub-frame 9; and/or
A part or all of other REs than REs where CRS ports 0 to 3 are located, in a part or all of other symbols than symbols occupied by PSSs and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the processor 1100 is configured:
To determine the following resources in the at least one radio frame as the resources to which the PBCH with enhanced coverage is mapped:
A part or all of other REs than REs where CRS ports 0 to 3 are located, in a part or all of symbols where CRS ports are located, in a part or all of other symbols than symbols occupied by legacy PBCH, and PDCCHs, in a part or all of sub-frame 0, sub-frame 5, and sub-frame 9; and/or
A part or all of other REs than REs where CRS ports 0 to 3 are located, in a part or all of other symbols than symbols occupied by PSSs and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the processor 1100 is configured:
To determine the following resources in the at least one radio frame as the resources to which the PBCH with enhanced coverage is mapped:
A part or all of other REs than REs where CRS ports 0 to 3 are located, in a part or all of other symbols than symbols occupied by legacy PBCH, SSSs, and CSI-RSs, in a part or all of sub-frame 0, sub-frame 5, and sub-frame 9; and/or
A part or all of other REs than REs where CRS ports 0 to 3 are located, in a part or all of other symbols than symbols occupied by PSSs and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the resources, in the at least one radio frame, to which the PBCH with enhanced coverage is mapped, are located on N sub-carriers around the center of a system bandwidth of the radio frame, where N represents a positive integer.

Here in Fg.11, a bus architecture can include any number of interconnection buses and bridges which are particularly configured to link various circuits together including one or more processor represented by the processor 1100, and a memory represented by a memory 1120. The bus architecture can link various other circuits together, e.g., peripheral devices, a manostat, a power management circuit, etc., all of which are well known in the art, so a repeated description thereof will be omitted in this context. A bus interface provides an interface. The transceiver 1110 can include a plurality of elements including a transmitter and a receiver configured to provide elements communicating with other various apparatuses over a transmission medium. For different user equipment, a user interface 1130 can also be an interface via which needed internal and external devices can be connected, where the connected devices include but will not be limited to a keypad, a display, a speaker, a microphone, a joystick, etc.

The processor 1100 is responsible of managing the bus architecture and of common processes, and the memory 1120 can store data used by the processor 1100 in operation.

Based upon the same inventive idea, embodiments of the invention further provide a method for transmitting a PBCH by a network-side device, and a method for receiving a PBCH by a user equipment, and since these methods correspond to devices which are the devices in the system for transmitting a PBCH according to the embodiment of the invention, and address the problem under a similar principle to the system, reference can be made to the implementation of the system for implementations of these methods, so a repeated description thereof will be omitted here.

As illustrated in Fig.12, a method for transmitting a PBCH by a network-side device according to an embodiment of the invention includes the following operations:
In the operation 1201, the network-side device determines resources, in at least one radio frame, to which a PBCH with enhanced coverage is mapped; and
In the operation 1202, the network-side device transmits the PBCH with enhanced coverage over the resources determined.

Preferably the network-side device determines the resources, in the at least one radio frame, to which the PBCH with enhanced coverage is mapped, as follows:
The network-side device determines the following resources in the at least one radio frame as the resources to which the PBCH with enhanced coverage is mapped:
A part or all of other REs than REs where CRS ports 0 to 3 are located, in a part or all of other symbols than symbols occupied by legacy PBCH, SSSs, and PDCCHs, in a part or all of sub-frame 0, sub-frame 5, and sub-frame 9; and/or
A part or all of other REs than REs where CRS ports 0 to 3 are located, in a part or all of other symbols than symbols occupied by PSSs, and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the network-side device determines the resources, in the at least one radio frame, to which the PBCH with enhanced coverage is mapped, as follows:
The network-side device determines the following resources in the at least one radio frame as the resources to which the PBCH with enhanced coverage is mapped:
A part or all of other REs than REs where reserved CSI-RSs are located, and REs where CRS ports 0 to 3 are located, in a part or all of other symbols than symbols occupied by legacy PBCH, SSSs, and PDCCHs, in a part or all of sub-frame 0, sub-frame 5, and sub-frame 9; and/or
A part or all of other REs than REs where CRS ports 0 to 3 are located, in a part or all of other symbols than symbols occupied by PSSs and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the network-side device determines the resources, in the at least one radio frame, to which the PBCH with enhanced coverage is mapped, as follows:
The network-side device determines the following resources in the at least one radio frame as the resources to which the PBCH with enhanced coverage is mapped:
A part or all of other REs than REs where CRS ports 0 to 3 are located, in a part or all of symbols where CRS ports are located, in a part or all of other symbols than symbols occupied by legacy PBCH, and PDCCHs, in a part or all of sub-frame 0, sub-frame 5, and sub-frame 9; and/or
A part or all of other REs than REs where CRS ports 0 to 3 are located, in a part or all of other symbols than symbols occupied by PSSs and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the network-side device determines the resources, in the at least one radio frame, to which the PBCH with enhanced coverage is mapped, as follows:
The network-side device determines the following resources in the at least one radio frame as the resources to which the PBCH with enhanced coverage is mapped:
A part or all of other REs than REs where CRS ports 0 to 3 are located, in a part or all of other symbols than symbols occupied by legacy PBCH, SSSs, and CSI-RSs, in a part or all of sub-frame 0, sub-frame 5, and sub-frame 9; and/or
A part or all of other REs than REs where CRS ports 0 to 3 are located, in a part or all of other symbols than symbols occupied by PSSs and PDCCHs, in a DwPTS of sub-frame 1; and/or
A part or all of other REs than REs where CRS ports 0 to 3 are located, in specific symbols of sub-frame 6;
**[00261**] Here the specific symbols are symbols in the sub-frame 6, indices of which are the same as indices of the symbols in which the PBCH with enhanced coverage is transmitted, in the DwPTS of the sub-frame 1.

Preferably the resources, in the at least one radio frame, to which the PBCH with enhanced coverage is mapped, are located on N sub-carriers around the center of a system bandwidth of the radio frame, where N represents a positive integer.

Preferably N is 72.

As illustrated in Fig.13, a method for receiving a PBCH by a user equipment according to an embodiment of the invention includes the following operations:
In the operation 1301, the user equipment determines resources, in at least one radio frame, to which a PBCH with enhanced coverage is mapped; and
In the operation 1302, the user equipment receives the PBCH with enhanced coverage over the resources determined.

Preferably the user equipment determines the resources, in the at least one radio frame, to which the PBCH with enhanced coverage is mapped, as follows:
The user equipment determines the following resources in the at least one radio frame as the resources to which the PBCH with enhanced coverage is mapped:
A part or all of other REs than REs where CRS ports 0 to 3 are located, in a part or all of other symbols than symbols occupied by legacy PBCH, SSSs, and PDCCHs, in a part or all of sub-frame 0, sub-frame 5, and sub-frame 9; and/or
A part or all of other REs than REs where CRS ports 0 to 3 are located, in a part or all of other symbols than symbols occupied by PSSs, and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the user equipment determines the resources, in the at least one radio frame, to which the PBCH with enhanced coverage is mapped, as follows:
The user equipment determines the following resources in the at least one radio frame as the resources to which the PBCH with enhanced coverage is mapped:
A part or all of other REs than REs where reserved CSI-RSs are located, and REs where CRS ports 0 to 3 are located, in a part or all of other symbols than symbols occupied by legacy PBCH, SSSs, and PDCCHs, in a part or all of sub-frame 0, sub-frame 5, and sub-frame 9; and/or
A part or all of other REs than REs where CRS ports 0 to 3 are located, in a part or all of other symbols than symbols occupied by PSSs and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the user equipment determines the resources, in the at least one radio frame, to which the PBCH with enhanced coverage is mapped, as follows:
The user equipment determines the following resources in the at least one radio frame as the resources to which the PBCH with enhanced coverage is mapped:
A part or all of other REs than REs where CRS ports 0 to 3 are located, in a part or all of symbols where CRS ports are located, in a part or all of other symbols than symbols occupied by legacy PBCH, and PDCCHs, in a part or all of sub-frame 0, sub-frame 5, and sub-frame 9; and/or
A part or all of other REs than REs where CRS ports 0 to 3 are located, in a part or all of other symbols than symbols occupied by PSSs and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the user equipment determines the resources, in the at least one radio frame, to which the PBCH with enhanced coverage is mapped, as follows:
The user equipment determines the following resources in the at least one radio frame as the resources to which the PBCH with enhanced coverage is mapped:
A part or all of other REs than REs where CRS ports 0 to 3 are located, in a part or all of other symbols than symbols occupied by legacy PBCH, SSSs, and CSI-RSs, in a part or all of sub-frame 0, sub-frame 5, and sub-frame 9; and/or
A part or all of other REs than REs where CRS ports 0 to 3 are located, in a part or all of other symbols than symbols occupied by PSSs and PDCCHs, in a DwPTS of sub-frame 1; and/or
A part or all of other REs than REs where CRS ports 0 to 3 are located, in specific symbols of sub-frame 6;
Here the specific symbols are symbols in the sub-frame 6, indices of which are the same as indices of the symbols in which the PBCH with enhanced coverage is transmitted, in the DwPTS of the sub-frame 1.

Preferably the resources, in the at least one radio frame, to which the PBCH with enhanced coverage is mapped, are located on N sub-carriers around the center of a system bandwidth of the radio frame, where N represents a positive integer.

Preferably N is 72.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments.

Evidently those skilled in the art can make various modifications and variations to the invention without departing from the scope of the invention as defined by the appended claims. Thus the invention is also intended to encompass these modifications and variations thereto so long as the modifications and variations come into the scope of the claims appended to the invention and their equivalents.

## Claims

1. A method for transmitting a Physical Broadcast Channel, PBCH, in an LTE communication system, the method comprising:
determining (1201), by a network-side device, resources, in at least one radio frame, to which a PBCH with enhanced coverage is mapped; and
transmitting (1202), by the network-side device, the PBCH with enhanced coverage over the resources determined;
**characterized in that**, the determining, by the network-side device, the resources, in the at least one radio frame, to which the PBCH with enhanced coverage is mapped comprises:
determining, by the network-side device, the following resources in the at least one radio frame as the resources to which the PBCH with enhanced coverage is mapped:
a part or all of other Resource Elements, REs, than REs where Cell-specific Reference Signal, CRS, ports 0 to 3 are located, in a part or all of other symbols than symbols occupied by legacy PBCH, Secondary Synchronization Signals, SSSs, and Physical Downlink Control Channels, PDCCHs, in sub-frame 9; and/or
a part or all of other REs than REs where CRS ports 0 to 3 are located, in a part or all of other symbols than symbols occupied by Primary Synchronization Signals, PSSs, and PDCCHs, in a Downlink Pilot Time Slot, DwPTS, of sub-frame 1; and/or
a part or all of other REs than REs where CRS ports 0 to 3 are located, in specific symbols of sub-frame 6;
wherein the specific symbols are symbols in the sub-frame 6, indices of which are the same as indices of the symbols in which the PBCH with enhanced coverage is transmitted, in the DwPTS of the sub-frame 1;
or, the determining, by the network-side device, the resources, in the at least one radio frame, to which the PBCH with enhanced coverage is mapped comprises:
determining, by the network-side device, the following resources in the at least one radio frame as the resources to which the PBCH with enhanced coverage is mapped:
a part or all of other REs than REs where reserved Channel State Information-Reference Signals, CSI-RSs, are located, and REs where CRS ports 0 to 3 are located, in a part or all of other symbols than symbols occupied by legacy PBCH, SSSs, and PDCCHs, in sub-frame 9; and/or
a part or all of other REs than REs where CRS ports 0 to 3 are located, in a part or all of other symbols than symbols occupied by PSSs and PDCCHs, in a DwPTS of sub-frame 1; and/or
a part or all of other REs than REs where CRS ports 0 to 3 are located, in specific symbols of sub-frame 6;
wherein the specific symbols are symbols in the sub-frame 6, indices of which are the same as indices of the symbols in which the PBCH with enhanced coverage is transmitted, in the DwPTS of the sub-frame 1;
or, the determining, by the network-side device, the resources, in the at least one radio frame, to which the PBCH with enhanced coverage is mapped comprises:
determining, by the network-side device, the following resources in the at least one radio frame as the resources to which the PBCH with enhanced coverage is mapped:
a part or all of other REs than REs where CRS ports 0 to 3 are located, in a part or all of symbols where CRS ports are located, in a part or all of other symbols than symbols occupied by legacy PBCH, and PDCCHs, in a part or all of sub-frame 0, sub-frame 5, and sub-frame 9; and/or
a part or all of other REs than REs where CRS ports 0 to 3 are located, in a part or all of other symbols than symbols occupied by PSSs and PDCCHs, in a DwPTS of sub-frame 1; and/or
a part or all of other REs than REs where CRS ports 0 to 3 are located, in specific symbols of sub-frame 6;
wherein the specific symbols are symbols in the sub-frame 6, indices of which are the same as indices of the symbols in which the PBCH with enhanced coverage is transmitted, in the DwPTS of the sub-frame 1.

2. A method for receiving a Physical Broadcast Channel, PBCH, in an LTE communication system, the method comprising:
determining (1301), by a user equipment, resources, in at least one radio frame, to which a PBCH with enhanced coverage is mapped; and
receiving (1302), by the user equipment, the PBCH with enhanced coverage over the resources determined;
**characterized in that**, the determining, by the user equipment, the resources, in the at least one radio frame, to which the PBCH with enhanced coverage is mapped comprises:
determining, by the user equipment, the following resources in the at least one radio frame as the resources to which the PBCH with enhanced coverage is mapped:
a part or all of other Resource Elements, REs, than REs where Cell-specific Reference Signal, CRS ports 0 to 3 are located, in a part or all of other symbols than symbols occupied by legacy PBCH, Secondary Synchronization Signals, SSSs, and Physical Downlink Control Channels, PDCCHs, in sub-frame 9; and/or
a part or all of other REs than REs where CRS ports 0 to 3 are located, in a part or all of other symbols than symbols occupied by Primary Synchronization Signals, PSSs, and PDCCHs, in a Downlink Pilot Time Slot, DwPTS, of sub-frame 1; and/or
a part or all of other REs than REs where CRS ports 0 to 3 are located, in specific symbols of sub-frame 6;
wherein the specific symbols are symbols in the sub-frame 6, indices of which are the same as indices of the symbols in which the PBCH with enhanced coverage is transmitted, in the DwPTS of the sub-frame 1;
or, the determining, by the user equipment, the resources, in the at least one radio frame, to which the PBCH with enhanced coverage is mapped comprises:
determining, by the user equipment, the following resources in the at least one radio frame as the resources to which the PBCH with enhanced coverage is mapped:
a part or all of other REs than REs where reserved Channel State Information-Reference Signals, CSI-RSs, are located, and REs where CRS ports 0 to 3 are located, in a part or all of other symbols than symbols occupied by legacy PBCH, SSSs, and PDCCHs, in sub-frame 9; and/or
a part or all of other REs than REs where CRS ports 0 to 3 are located, in a part or all of other symbols than symbols occupied by PSSs and PDCCHs, in a DwPTS of sub-frame 1; and/or
a part or all of other REs than REs where CRS ports 0 to 3 are located, in specific symbols of sub-frame 6;
wherein the specific symbols are symbols in the sub-frame 6, indices of which are the same as indices of the symbols in which the PBCH with enhanced coverage is transmitted, in the DwPTS of the sub-frame 1;
or, the determining, by the user equipment, the resources, in the at least one radio frame, to which the PBCH with enhanced coverage is mapped comprises:
determining, by the user equipment, the following resources in the at least one radio frame as the resources to which the PBCH with enhanced coverage is mapped:
a part or all of other REs than REs where CRS ports 0 to 3 are located, in a part or all of symbols where CRS ports are located, in a part or all of other symbols than symbols occupied by legacy PBCH, and PDCCHs, in a part or all of sub-frame 0, sub-frame 5, and sub-frame 9; and/or
a part or all of other REs than REs where CRS ports 0 to 3 are located, in a part or all of other symbols than symbols occupied by PSSs and PDCCHs, in a DwPTS of sub-frame 1; and/or
a part or all of other REs than REs where CRS ports 0 to 3 are located, in specific symbols of sub-frame 6;
wherein the specific symbols are symbols in the sub-frame 6, indices of which are the same as indices of the symbols in which the PBCH with enhanced coverage is transmitted, in the DwPTS of the sub-frame 1.

3. A network-side device of an LTE communication system adapted for transmitting a Physical Broadcast Channel, PBCH, the network-side device comprising:
a first determining module (810) configured to determine, resources, in at least one radio frame, to which a PBCH with enhanced coverage is mapped; and
a transmitting module (820) configured to transmit the PBCH with enhanced coverage over the resources determined;
**characterized in that**, the first determining module (810) is configured to determine the following resources in the at least one radio frame as the resources to which the PBCH with enhanced coverage is mapped:
a part or all of other Resource Elements, REs, than REs where Cell-specific Reference Signal, CRS, ports 0 to 3 are located, in a part or all of other symbols than symbols occupied by legacy PBCH, Secondary Synchronization Signals, SSSs, and Physical Downlink Control Channels, PDCCHs, in sub-frame 9; and/or
a part or all of other REs than REs where CRS ports 0 to 3 are located, in a part or all of other symbols than symbols occupied by Primary Synchronization Signals, PSSs, and PDCCHs, in a Downlink Pilot Time Slot, DwPTS, of sub-frame 1; and/or
a part or all of other REs than REs where CRS ports 0 to 3 are located, in specific symbols of sub-frame 6;
wherein the specific symbols are symbols in the sub-frame 6, indices of which are the same as indices of the symbols in which the PBCH with enhanced coverage is transmitted, in the DwPTS of the sub-frame 1;
or, the first determining module (810) is configured to determine the following resources in the at least one radio frame as the resources to which the PBCH with enhanced coverage is mapped:
a part or all of other REs than REs where reserved Channel State Information-Reference Signals, CSI-RSs, are located, and REs where CRS ports 0 to 3 are located, in a part or all of other symbols than symbols occupied by legacy PBCH, SSSs, and PDCCHs, in sub-frame 9; and/or
a part or all of other REs than REs where CRS ports 0 to 3 are located, in a part or all of other symbols than symbols occupied by PSSs and PDCCHs, in a DwPTS of sub-frame 1; and/or
a part or all of other REs than REs where CRS ports 0 to 3 are located, in specific symbols of sub-frame 6;
wherein the specific symbols are symbols in the sub-frame 6, indices of which are the same as indices of the symbols in which the PBCH with enhanced coverage is transmitted, in the DwPTS of the sub-frame 1;
or, the first determining module (810) is configured to determine the following resources in the at least one radio frame as the resources to which the PBCH with enhanced coverage is mapped:
a part or all of other REs than REs where CRS ports 0 to 3 are located, in a part or all of symbols where CRS ports are located, in a part or all of other symbols than symbols occupied by legacy PBCH, and PDCCHs, in a part or all of sub-frame 0, sub-frame 5, and sub-frame 9; and/or
a part or all of other REs than REs where CRS ports 0 to 3 are located, in a part or all of other symbols than symbols occupied by PSSs and PDCCHs, in a DwPTS of sub-frame 1; and/or
a part or all of other REs than REs where CRS ports 0 to 3 are located, in specific symbols of sub-frame 6;
wherein the specific symbols are symbols in the sub-frame 6, indices of which are the same as indices of the symbols in which the PBCH with enhanced coverage is transmitted, in the DwPTS of the sub-frame 1.

4. A user equipment of an LTE communication system adapted receiving a Physical Broadcast Channel,PBCH, the user equipment comprising:
a second determining module (910) configured to determine resources, in at least one radio frame, to which a PBCH with enhanced coverage is mapped; and
a receiving module (920) configured to receive the PBCH with enhanced coverage over the resources determined;
**characterized in that**, wherein the second determining module (910) is configured to determine the following resources in the at least one radio frame as the resources to which the PBCH with enhanced coverage is mapped:
a part or all of other Resource Elements, REs, than REs where Cell-specific Reference Signal, CRS, ports 0 to 3 are located, in a part or all of other symbols than symbols occupied by legacy PBCH, Secondary Synchronization Signals, SSSs, and Physical Downlink Control Channels, PDCCHs, in sub-frame 9; and/or
a part or all of other REs than REs where CRS ports 0 to 3 are located, in a part or all of other symbols than symbols occupied by Primary Synchronization Signals, PSSs, and PDCCHs, in a Downlink Pilot Time Slot, DwPTS, of sub-frame 1; and/or
a part or all of other REs than REs where CRS ports 0 to 3 are located, in specific symbols of sub-frame 6;
wherein the specific symbols are symbols in the sub-frame 6, indices of which are the same as indices of the symbols in which the PBCH with enhanced coverage is transmitted, in the DwPTS of the sub-frame 1.
wherein the second determining module (910) is configured to determine the following resources in the at least one radio frame as the resources to which the PBCH with enhanced coverage is mapped:
a part or all of other REs than REs where reserved Channel State Information-Reference Signals, CSI-RSs, are located, and REs where CRS ports 0 to 3 are located, in a part or all of other symbols than symbols occupied by legacy PBCH, SSSs, and PDCCHs, in sub-frame 9; and/or
a part or all of other REs than REs where CRS ports 0 to 3 are located, in a part or all of other symbols than symbols occupied by PSSs and PDCCHs, in a DwPTS of sub-frame 1; and/or
a part or all of other REs than REs where CRS ports 0 to 3 are located, in specific symbols of sub-frame 6;
wherein the specific symbols are symbols in the sub-frame 6, indices of which are the same as indices of the symbols in which the PBCH with enhanced coverage is transmitted, in the DwPTS of the sub-frame 1;
wherein the second determining module (910) is configured to determine the following resources in the at least one radio frame as the resources to which the PBCH with enhanced coverage is mapped:
a part or all of other REs than REs where CRS ports 0 to 3 are located, in a part or all of symbols where CRS ports are located, in a part or all of other symbols than symbols occupied by legacy PBCH, and PDCCHs, in a part or all of sub-frame 0, sub-frame 5, and sub-frame 9; and/or
a part or all of other REs than REs where CRS ports 0 to 3 are located, in a part or all of other symbols than symbols occupied by PSSs and PDCCHs, in a DwPTS of sub-frame 1; and/or
a part or all of other REs than REs where CRS ports 0 to 3 are located, in specific symbols of sub-frame 6;
wherein the specific symbols are symbols in the sub-frame 6, indices of which are the same as indices of the symbols in which the PBCH with enhanced coverage is transmitted, in the DwPTS of the sub-frame 1.

## Patentansprüche

1. Verfahren zur Übertragung eines physischen Rundfunkkanals (Physical Broadcast Channel, PBCH) in einem LTE-Kommunikationssystem, das Verfahren umfassend:
Bestimmen (1201), durch eine netzwerkseitige Vorrichtung, von Ressourcen in mindestens einem Funkrahmen, denen ein PBCH mit verbesserter Abdeckung zugeordnet ist; und
Übertragen (1202), durch die netzwerkseitige Vorrichtung, des PBCH mit verbesserter Abdeckung über die bestimmten Ressourcen;
**dadurch gekennzeichnet, dass** das Bestimmen, durch die netzwerkseitige Vorrichtung, der Ressourcen in dem mindestens einen Funkrahmen, denen der PBCH mit verbesserter Abdeckung zugeordnet ist, umfasst:
Bestimmen, durch die netzwerkseitige Vorrichtung, der folgenden Ressourcen in dem mindestens einen Funkrahmen als die Ressourcen, denen der PBCH mit verbesserter Abdeckung zugeordnet ist:
einen Teil oder sämtliche andere Ressourcenelemente (REs) als die REs, in denen sich die Ports 0 bis 3 des zellenspezifischen Referenzsignals (Cell-Specific Reference Signal, CRS) befinden, in einem Teil oder sämtlichen anderen Symbolen als die Symbole, die von dem bestehenden PBCH, den sekundären Synchronisationssignalen (Secondary Synchronization Signals, SSS) und den physischen Downlink-Steuerkanälen (Physical Downlink Control Channels, PDCCHs) in dem Teilrahmen 9 belegt sind; und/oder
einen Teil oder sämtliche anderen REs als die REs, in denen sich die CRS-Ports 0 bis 3 befinden, in einem Teil oder sämtlichen anderen Symbolen als die Symbole, die von den primären Synchronisationssignalen (Primary Synchronization Signals, PSSs) und PDCCHs in einem Downlink-Pilotzeitschlitz (Downlink Pilot Time Slot, DwPTS) des Teilrahmens 1 belegt sind; und/oder
einen Teil oder sämtliche anderen REs als die REs, in denen sich die CRS-Ports 0 bis 3 befinden, in bestimmten Symbolen des Teilrahmens 6;
wobei die spezifischen Symbole Symbole in dem Teilrahmen 6 sind, deren Indizes dieselben sind wie die Indizes der Symbole, in denen der PBCH mit verbesserter Abdeckung übertragen wird, in dem DwPTS des Teilrahmens 1;
oder
das Bestimmen, durch die netzwerkseitige Vorrichtung, der Ressourcen in dem mindestens einen Funkrahmen, denen der PBCH mit verbesserter Abdeckung zugeordnet ist, umfasst:
Bestimmen, durch die netzwerkseitige Vorrichtung, der folgenden Ressourcen in dem mindestens einen Funkrahmen als die Ressourcen, denen der PBCH mit verbesserter Abdeckung zugeordnet ist:
einen Teil oder sämtliche anderen REs als die REs, in denen sich reservierte Kanalzustandsinformationsreferenzsignale (Channel State Information Reference Signals, CSI-RSs) befinden und REs, in denen sich die CRS-Ports 0 bis 3 befinden, in einem Teil oder sämtlichen anderen Symbolen als die Symbole, die von einem bestehenden PBCH, den SSSs und den PDCCHs in dem Teilrahmen 9 belegt sind; und/oder
einen Teil oder sämtliche anderen REs als die REs, in denen sich die CRS-Ports 0 bis 3 befinden, in einem Teil oder sämtlichen anderen Symbolen als die Symbole, die von den PSSs und PDCCHs in einem DwPTS des Teilrahmens 1 belegt sind; und/oder
einen Teil oder sämtliche anderen REs als die REs, in denen sich die CRS-Ports 0 bis 3 befinden, in bestimmten Symbolen des Teilrahmens 6;
wobei die spezifischen Symbole Symbole in dem Teilrahmen 6 sind, deren Indizes dieselben sind wie die Indizes der Symbole, in denen der PBCH mit verbesserter Abdeckung übertragen wird, in dem DwPTS des Teilrahmens 1;
oder
das Bestimmen, durch die netzwerkseitige Vorrichtung, der Ressourcen in dem mindestens einen Funkrahmen, denen der PBCH mit verbesserter Abdeckung zugeordnet ist, umfasst:
Bestimmen, durch die netzwerkseitige Vorrichtung, der folgenden Ressourcen in dem mindestens einen Funkrahmen als die Ressourcen, denen der PBCH mit verbesserter Abdeckung zugeordnet ist:
einen Teil oder sämtliche anderen REs als die REs, in denen sich die CRS-Ports 0 bis 3 befinden, in einem Teil oder allen Symbolen, in denen sich die CRS-Ports befinden, in einem Teil oder sämtlichen anderen Symbolen als die Symbole, die von dem bestehenden PBCH und den PDCCHs belegt sind, in einen Teil oder allen des Teilrahmens 0, Teilrahmens 5 und Teilrahmens 9; und/oder
einen Teil oder sämtliche anderen REs als die REs, in denen sich die CRS-Ports 0 bis 3 befinden, in einem Teil oder sämtlichen anderen Symbolen als die Symbole,
die von den PSSs und PDCCHs in einem DwPTS des Teilrahmens 1 belegt sind; und/oder
einen Teil oder sämtliche anderen REs als die REs, in denen sich die CRS-Ports 0 bis 3 befinden, in bestimmten Symbolen des Teilrahmens 6;
wobei die spezifischen Symbole Symbole in dem Teilrahmen 6 sind, deren Indizes dieselben sind wie die Indizes der Symbole, in denen der PBCH mit verbesserter Abdeckung übertragen wird, in dem DwPTS des Teilrahmens 1.

2. Verfahren zum Empfangen eines physischen Rundfunkkanals (PBCH) in einem LTE-Kommunikationssystem, das Verfahren umfassend:
Bestimmen (1301), durch ein Benutzergerät, von Ressourcen in mindestens einem Funkrahmen, denen ein PBCH mit verbesserter Abdeckung zugeordnet ist; und
Empfangen (1302), durch das Benutzergerät, des PBCH mit verbesserter Abdeckung über die bestimmten Ressourcen;
**dadurch gekennzeichnet, dass** das Bestimmen, durch das Benutzergerät, der Ressourcen in dem mindestens einen Funkrahmen, denen der PBCH mit verbesserter Abdeckung zugeordnet ist, umfasst:
Bestimmen, durch das Benutzergerät, der folgenden Ressourcen in dem mindestens einen Funkrahmen als die Ressourcen, denen der PBCH mit verbesserter Abdeckung zugeordnet ist:
einen Teil oder sämtliche andere Ressourcenelemente (REs) als die REs, in denen sich die Ports 0 bis 3 des zellenspezifischen Referenzsignals (CRS) befinden, in einem Teil oder sämtlichen anderen Symbolen als die Symbole, die von dem bestehenden PBCH, den sekundären Synchronisationssignalen (SSS) und den physischen Downlink-Steuerkanälen (PDCCHs) in dem Teilrahmen 9 belegt sind; und/oder
einen Teil oder sämtliche anderen REs als die REs, in denen sich die CRS-Ports 0 bis 3 befinden, in einem Teil oder sämtlichen anderen Symbolen als die Symbole, die von den primären Synchronisationssignalen (PSSs) und PDCCHs in einem Downlink-Pilotzeitschlitz (DwPTS) des Teilrahmens 1 belegt sind; und/oder
einen Teil oder sämtliche anderen REs als die REs, in denen sich die CRS-Ports 0 bis 3 befinden, in bestimmten Symbolen des Teilrahmens 6;
wobei die spezifischen Symbole Symbole in dem Teilrahmen 6 sind, deren Indizes dieselben sind wie die Indizes der Symbole, in denen der PBCH mit verbesserter Abdeckung übertragen wird, in dem DwPTS des Teilrahmens 1;
oder
das Bestimmen, durch das Benutzergerät, der Ressourcen in dem mindestens einen Funkrahmen, denen der PBCH mit verbesserter Abdeckung zugeordnet ist, umfasst:
Bestimmen, durch das Benutzergerät, der folgenden Ressourcen in dem mindestens einen Funkrahmen als die Ressourcen, denen der PBCH mit verbesserter Abdeckung zugeordnet ist:
einen Teil oder sämtliche anderen REs als die REs, in denen sich reservierte Kanalzustandsinformationsreferenzsignale (CSI-RSs) befinden, und REs, in denen sich die CRS-Ports 0 bis 3 befinden, in einem Teil oder sämtlichen anderen Symbolen als die Symbole, die von einem bestehenden PBCH, den SSSs und den PDCCHs in dem Teilrahmen 9 belegt sind; und/oder
einen Teil oder sämtliche anderen REs als die REs, in denen sich die CRS-Ports 0 bis 3 befinden, in einem Teil oder sämtlichen anderen Symbolen als die Symbole, die von den PSSs und PDCCHs in einem DwPTS des Teilrahmens 1 belegt sind; und/oder
einen Teil oder sämtliche anderen REs als die REs, in denen sich die CRS-Ports 0 bis 3 befinden, in bestimmten Symbolen des Teilrahmens 6;
wobei die spezifischen Symbole Symbole in dem Teilrahmen 6 sind, deren Indizes dieselben sind wie die Indizes der Symbole, in denen der PBCH mit verbesserter Abdeckung übertragen wird, in dem DwPTS des Teilrahmens 1;
oder
das Bestimmen, durch das Benutzergerät, der Ressourcen in dem mindestens einen Funkrahmen, denen der PBCH mit verbesserter Abdeckung zugeordnet ist, umfasst:
Bestimmen, durch das Benutzergerät, der folgenden Ressourcen in dem mindestens einen Funkrahmen als die Ressourcen, denen der PBCH mit verbesserter Abdeckung zugeordnet ist:
einen Teil oder sämtliche anderen REs als die REs, in denen sich die CRS-Ports 0 bis 3 befinden, in einem Teil oder allen Symbolen, in denen sich die CRS-Ports befinden, in einem Teil oder sämtlichen anderen Symbolen als die Symbole, die von dem bestehenden PBCH und den PDCCHs belegt sind, in einen Teil oder allen des Teilrahmens 0, Teilrahmens 5 und Teilrahmens 9; und/oder
einen Teil oder sämtliche anderen REs als die REs, in denen sich die CRS-Ports 0 bis 3 befinden, in einem Teil oder sämtlichen anderen Symbolen als die Symbole, die von den PSSs und PDCCHs in einem DwPTS des Teilrahmens 1 belegt sind; und/oder
einen Teil oder sämtliche anderen REs als die REs, in denen sich die CRS-Ports 0 bis 3 befinden, in bestimmten Symbolen des Teilrahmens 6;
wobei die spezifischen Symbole Symbole in dem Teilrahmen 6 sind, deren Indizes dieselben sind wie die Indizes der Symbole, in denen der PBCH mit verbesserter Abdeckung übertragen wird, in dem DwPTS des Teilrahmens 1.

3. Netzwerkseitige Vorrichtung eines LTE-Kommunikationssystems, das dazu vorgesehen ist, einen physischen Rundfunkkanal (PBCH) zu übertragen, die netzwerkseitige Vorrichtung umfassend:
ein erstes Bestimmungsmodul (810), das konfiguriert ist, um Ressourcen in mindestens einem Funkrahmen zu bestimmen, denen ein PBCH mit verbesserter Abdeckung zugeordnet ist; und
ein Sendemodul (820), das konfiguriert ist, um den PBCH mit verbesserter Abdeckung über die bestimmten Ressourcen zu übertragen;
**dadurch gekennzeichnet, dass** das erste Bestimmungsmodul (810) konfiguriert ist, um die folgenden Ressourcen in dem mindestens einen Funkrahmen als die Ressourcen zu bestimmen, denen der PBCH mit verbesserter Abdeckung zugeordnet ist:
einen Teil oder sämtliche andere Ressourcenelemente (REs) als die REs, in denen sich die Ports 0 bis 3 des zellenspezifischen Referenzsignals (CRS) befinden, in einem Teil oder sämtlichen anderen Symbolen als die Symbole, die von dem bestehenden PBCH, den sekundären Synchronisationssignalen (SSS) und den physischen Downlink-Steuerkanälen (PDCCHs) in dem Teilrahmen 9 belegt sind; und/oder
einen Teil oder sämtliche anderen REs als die REs, in denen sich die CRS-Ports 0 bis 3 befinden, in einem Teil oder sämtlichen anderen Symbolen als die Symbole, die von den primären Synchronisationssignalen (PSSs) und PDCCHs in einem Downlink-Pilotzeitschlitz (DwPTS) des Teilrahmens 1 belegt sind; und/oder
einen Teil oder sämtliche anderen REs als die REs, in denen sich die CRS-Ports 0 bis 3 befinden, in bestimmten Symbolen des Teilrahmens 6;
wobei die spezifischen Symbole Symbole in dem Teilrahmen 6 sind, deren Indizes dieselben sind wie die Indizes der Symbole, in denen der PBCH mit verbesserter Abdeckung übertragen wird, in dem DwPTS des Teilrahmens 1;
oder
das erste Bestimmungsmodul (810) konfiguriert ist, um die folgenden Ressourcen in dem mindestens einen Funkrahmen als die Ressourcen zu bestimmen, denen der PBCH mit verbesserter Abdeckung zugeordnet ist:
einen Teil oder sämtliche anderen REs als die REs, in denen sich reservierte Kanalzustandsinformationsreferenzsignale (CSI-RSs) befinden, und REs, in denen sich die CRS-Ports 0 bis 3 befinden, in einem Teil oder sämtlichen anderen Symbolen als die Symbole, die von einem bestehenden PBCH, den SSSs und den PDCCHs in dem Teilrahmen 9 belegt sind; und/oder
einen Teil oder sämtliche anderen REs als die REs, in denen sich die CRS-Ports 0 bis 3 befinden, in einem Teil oder sämtlichen anderen Symbolen als die Symbole, die von den PSSs und PDCCHs in einem DwPTS des Teilrahmens 1 belegt sind; und/oder
einen Teil oder sämtliche anderen REs als die REs, in denen sich die CRS-Ports 0 bis 3 befinden, in bestimmten Symbolen des Teilrahmens 6;
wobei die spezifischen Symbole Symbole in dem Teilrahmen 6 sind, deren Indizes dieselben sind wie die Indizes der Symbole, in denen der PBCH mit verbesserter Abdeckung übertragen wird, in dem DwPTS des Teilrahmens 1;
oder
das erste Bestimmungsmodul (810) konfiguriert ist, um die folgenden Ressourcen in dem mindestens einen Funkrahmen als die Ressourcen zu bestimmen, denen der PBCH mit verbesserter Abdeckung zugeordnet ist:
einen Teil oder sämtliche anderen REs als die REs, in denen sich die CRS-Ports 0 bis 3 befinden, in einem Teil oder allen Symbolen, in denen sich die CRS-Ports befinden, in einem Teil oder sämtlichen anderen Symbolen als die Symbole, die von dem bestehenden PBCH und den PDCCHs belegt sind, in einen Teil oder allen des Teilrahmens 0, Teilrahmens 5 und Teilrahmens 9; und/oder
einen Teil oder sämtliche anderen REs als die REs, in denen sich die CRS-Ports 0 bis 3 befinden, in einem Teil oder sämtlichen anderen Symbolen als die Symbole, die von den PSSs und PDCCHs in einem DwPTS des Teilrahmens 1 belegt sind; und/oder
einen Teil oder sämtliche anderen REs als die REs, in denen sich die CRS-Ports 0 bis 3 befinden, in bestimmten Symbolen des Teilrahmens 6;
wobei die spezifischen Symbole Symbole in dem Teilrahmen 6 sind, deren Indizes dieselben sind wie die Indizes der Symbole, in denen der PBCH mit verbesserter Abdeckung übertragen wird, in dem DwPTS des Teilrahmens 1.

4. Benutzergerät eines LTE-Kommunikationssystems, das dazu vorgesehen ist, einen physischen Rundfunkkanal (PBCH) zu empfangen, das Benutzergerät umfassend:
ein zweites Bestimmungsmodul (910), das konfiguriert ist, um Ressourcen in mindestens einem Funkrahmen zu bestimmen, denen ein PBCH mit verbesserter Abdeckung zugeordnet ist; und
ein Empfangsmodul (920), das konfiguriert ist, um den PBCH mit verbesserter Abdeckung über die bestimmten Ressourcen zu empfangen;
**dadurch gekennzeichnet, dass** das zweite Bestimmungsmodul (910) konfiguriert ist, um die folgenden Ressourcen in dem mindestens einen Funkrahmen als die Ressourcen zu bestimmen, denen der PBCH mit verbesserter Abdeckung zugeordnet ist:
einen Teil oder sämtliche andere Ressourcenelemente (REs) als die REs, in denen sich die Ports 0 bis 3 des zellenspezifischen Referenzsignals (CRS) befinden, in einem Teil oder sämtlichen anderen Symbolen als die Symbole, die von dem bestehenden PBCH, den sekundären Synchronisationssignalen (SSS) und den physischen Downlink-Steuerkanälen (PDCCHs) in dem Teilrahmen 9 belegt sind; und/oder
einen Teil oder sämtliche anderen REs als die REs, in denen sich die CRS-Ports 0 bis 3 befinden, in einem Teil oder sämtlichen anderen Symbolen als die Symbole, die von den primären Synchronisationssignalen (PSSs) und PDCCHs in einem Downlink-Pilotzeitschlitz (DwPTS) des Teilrahmens 1 belegt sind; und/oder
einen Teil oder sämtliche anderen REs als die REs, in denen sich die CRS-Ports 0 bis 3 befinden, in bestimmten Symbolen des Teilrahmens 6;
wobei die spezifischen Symbole Symbole in dem Teilrahmen 6 sind, deren Indizes dieselben sind wie die Indizes der Symbole, in denen der PBCH mit verbesserter Abdeckung übertragen wird, in dem DwPTS des Teilrahmens 1;
wobei das zweite Bestimmungsmodul (910) konfiguriert ist, um die folgenden Ressourcen in dem mindestens einen Funkrahmen als die Ressourcen zu bestimmen, denen der PBCH mit verbesserter Abdeckung zugeordnet ist:
einen Teil oder sämtliche anderen REs als die REs, in denen sich reservierte Kanalzustandsinformationsreferenzsignale (CSI-RSs) befinden, und REs, in denen sich die CRS-Ports 0 bis 3 befinden, in einem Teil oder sämtlichen anderen Symbolen als die Symbole, die von einem bestehenden PBCH, den SSSs und den PDCCHs in dem Teilrahmen 9 belegt sind; und/oder
einen Teil oder sämtliche anderen REs als die REs, in denen sich die CRS-Ports 0 bis 3 befinden, in einem Teil oder sämtlichen anderen Symbolen als die Symbole, die von den PSSs und PDCCHs in einem DwPTS des Teilrahmens 1 belegt sind; und/oder
einen Teil oder sämtliche anderen REs als die REs, in denen sich die CRS-Ports 0 bis 3 befinden, in bestimmten Symbolen des Teilrahmens 6;
wobei die spezifischen Symbole Symbole in dem Teilrahmen 6 sind, deren Indizes dieselben sind wie die Indizes der Symbole, in denen der PBCH mit verbesserter Abdeckung übertragen wird, in dem DwPTS des Teilrahmens 1;
wobei das zweite Bestimmungsmodul (910) konfiguriert ist, um die folgenden Ressourcen in dem mindestens einen Funkrahmen als die Ressourcen zu bestimmen, denen der PBCH mit verbesserter Abdeckung zugeordnet ist:
einen Teil oder sämtliche anderen REs als die REs, in denen sich die CRS-Ports 0 bis 3 befinden, in einem Teil oder allen Symbolen, in denen sich die CRS-Ports befinden, in einem Teil oder sämtlichen anderen Symbolen als die Symbole, die von dem bestehenden PBCH und den PDCCHs belegt sind, in einen Teil oder allen des Teilrahmens 0, Teilrahmens 5 und Teilrahmens 9; und/oder
einen Teil oder sämtliche anderen REs als die REs, in denen sich die CRS-Ports 0 bis 3 befinden, in einem Teil oder sämtlichen anderen Symbolen als die Symbole, die von den PSSs und PDCCHs in einem DwPTS des Teilrahmens 1 belegt sind; und/oder
einen Teil oder sämtliche anderen REs als die REs, in denen sich die CRS-Ports 0 bis 3 befinden, in bestimmten Symbolen des Teilrahmens 6;
wobei die spezifischen Symbole Symbole in dem Teilrahmen 6 sind, deren Indizes dieselben sind wie die Indizes der Symbole, in denen der PBCH mit verbesserter Abdeckung übertragen wird, in dem DwPTS des Teilrahmens 1.

## Revendications

1. Procédé pour transmettre un canal de diffusion physique (PBCH) dans un système de communication LTE, le procédé consistant :
à déterminer (1201), au moyen d'un dispositif côté réseau, des ressources, dans au moins une trame radio, avec lesquelles un canal PBCH ayant une couverture améliorée est mis en correspondance ; et
à transmettre (1202), au moyen du dispositif côté réseau, le canal PBCH ayant une couverture améliorée sur les ressources déterminées ;
**caractérisé en ce que** la détermination, par le dispositif côté réseau, des ressources, dans la ou les trames radio, avec lesquelles le canal PBCH ayant une couverture améliorée est mis en correspondance, consiste :
à déterminer, au moyen du dispositif côté réseau, les ressources suivantes dans la ou les trames radio en tant que ressources avec lesquelles le canal PBCH ayant une couverture améliorée est mis en correspondance :
une partie ou la totalité des éléments de ressources (RE) autres que des éléments RE où les ports 0 à 3 de signal de référence spécifique à une cellule (CRS) sont situés, dans une partie ou la totalité des symboles autres que des symboles occupés par un canal PBCH existant, des signaux de synchronisation secondaires (SSS) et des canaux de commande de liaison descendante physiques (PDCCH) dans la sous-trame 9 ; et/ou
une partie ou la totalité des éléments RE autres que des éléments RE où les ports 0 à 3 de signal CRS sont situés, dans une partie ou la totalité des symboles autres que des symboles occupés par des signaux de synchronisation primaires (PSS) et des canaux PDCCH dans un créneau temporel pilote de liaison descendante (DwPTS) de la sous-trame 1 ; et/ou
une partie ou la totalité des éléments RE autres que des éléments RE où les ports 0 à 3 de signal CRS sont situés, dans des symboles spécifiques de la sous-trame 6 ;
dans lequel les symboles spécifiques sont des symboles dans la sous-trame 6, dont des indices sont les mêmes que des indices des symboles dans lesquels le canal PBCH ayant une couverture améliorée est transmis, dans le créneau DwPTS de la sous-trame 1 ;
ou
la détermination, par le dispositif côté réseau, des ressources, dans la ou les trames radio, avec lesquelles le canal PBCH ayant une couverture améliorée est mis en correspondance, consiste :
à déterminer, au moyen du dispositif côté réseau, les ressources suivantes dans la ou les trames radio en tant que ressources avec lesquelles le canal PBCH ayant une couverture améliorée est mis en correspondance :
une partie ou la totalité des éléments RE autres que des éléments RE où les signaux de référence d'informations d'état de canal (CSI-RS) réservés sont situés, et des éléments RE où les ports 0 à 3 de signal CRS sont situés, dans une partie ou la totalité des symboles autres que des symboles occupés par un canal PBCH existant, des signaux SSS et des canaux PDCCH dans la sous-trame 9 ; et/ou
une partie ou la totalité des éléments RE autres que des éléments RE où les ports 0 à 3 de signal CRS sont situés, dans une partie ou la totalité des symboles autres que des symboles occupés par des signaux PSS et des canaux PDCCH dans un créneau DwPTS de la sous-trame 1 ; et/ou
une partie ou la totalité des éléments RE autres que des éléments RE où les ports 0 à 3 de signal CRS sont situés, dans des symboles spécifiques de la sous-trame 6 ;
dans lequel les symboles spécifiques sont des symboles dans la sous-trame 6, dont des indices sont les mêmes que des indices des symboles dans lesquels le canal PBCH ayant une couverture améliorée est transmis, dans le créneau DwPTS de la sous-trame 1 ;
ou
la détermination, par le dispositif côté réseau, des ressources, dans la ou les trames radio, avec lesquelles le canal PBCH ayant une couverture améliorée est mis en correspondance, consiste :
à déterminer, au moyen du dispositif côté réseau, les ressources suivantes dans la ou les trames radio en tant que ressources avec lesquelles le canal PBCH ayant une couverture améliorée est mis en correspondance :
une partie ou la totalité des éléments RE autres que des éléments RE où les ports 0 à 3 de signal CRS sont situés, dans une partie ou la totalité des symboles où des ports de signal CRS sont situés, dans une partie ou la totalité des symboles autres que des symboles occupés par un canal PBCH existant et des canaux PDCCH dans une partie ou la totalité de la sous-trame 0, de la sous-trame 5 et de la sous-trame 9 ; et/ou
une partie ou la totalité des éléments RE autres que des éléments RE où les ports 0 à 3 de signal CRS sont situés, dans une partie ou la totalité des symboles autres que des symboles occupés par des signaux PSS et des canaux PDCCH dans un créneau DwPTS de la sous-trame 1 ; et/ou
une partie ou la totalité des éléments RE autres que des éléments RE où les ports 0 à 3 de signal CRS sont situés, dans des symboles spécifiques de la sous-trame 6 ;
dans lequel les symboles spécifiques sont des symboles dans la sous-trame 6, dont des indices sont les mêmes que des indices des symboles dans lesquels le canal PBCH ayant une couverture améliorée est transmis, dans le créneau DwPTS de la sous-trame 1.

2. Procédé pour recevoir un canal de diffusion physique (PBCH) dans un système de communication LTE, le procédé consistant :
à déterminer (1301), au moyen d'un équipement utilisateur, des ressources, dans au moins une trame radio, avec lesquelles un canal PBCH ayant une couverture améliorée est mis en correspondance ; et
à recevoir (1302), au moyen de l'équipement utilisateur, le canal PBCH ayant une couverture améliorée sur les ressources déterminées ;
**caractérisé en ce que** la détermination, par l'équipement utilisateur, des ressources, dans la ou les trames radio, avec lesquelles le canal PBCH ayant une couverture améliorée est mis en correspondance, consiste :
à déterminer, au moyen de l'équipement utilisateur, les ressources suivantes dans la ou les trames radio en tant que ressources avec lesquelles le canal PBCH ayant une couverture améliorée est mis en correspondance :
une partie ou la totalité des éléments de ressources (RE) autres que des éléments RE où les ports 0 à 3 de signal de référence spécifique à une cellule (CRS) sont situés, dans une partie ou la totalité des symboles autres que des symboles occupés par un canal PBCH existant, des signaux de synchronisation secondaires (SSS) et des canaux de commande de liaison descendante physiques (PDCCH) dans la sous-trame 9 ; et/ou
une partie ou la totalité des éléments RE autres que des éléments RE où les ports 0 à 3 de signal CRS sont situés, dans une partie ou la totalité des symboles autres que des symboles occupés par des signaux de synchronisation primaires (PSS) et des canaux PDCCH dans un créneau temporel pilote de liaison descendante (DwPTS) de la sous-trame 1 ; et/ou
une partie ou la totalité des éléments RE autres que des éléments RE où les ports 0 à 3 de signal CRS sont situés, dans des symboles spécifiques de la sous-trame 6 ;
dans lequel les symboles spécifiques sont des symboles dans la sous-trame 6, dont des indices sont les mêmes que des indices des symboles dans lesquels le canal PBCH ayant une couverture améliorée est transmis, dans le créneau DwPTS de la sous-trame 1 ;
ou
la détermination, par l'équipement utilisateur, des ressources, dans la ou les trames radio, avec lesquelles le canal PBCH ayant une couverture améliorée est mis en correspondance, consiste :
à déterminer, au moyen de l'équipement utilisateur, les ressources suivantes dans la ou les trames radio en tant que ressources avec lesquelles le canal PBCH ayant une couverture améliorée est mis en correspondance :
une partie ou la totalité des éléments RE autres que des éléments RE où les signaux de référence d'informations d'état de canal (CSI-RS) réservés sont situés, et des éléments RE où les ports 0 à 3 de signal CRS sont situés, dans une partie ou la totalité des symboles autres que des symboles occupés par un canal PBCH existant, des signaux SSS et des canaux PDCCH dans la sous-trame 9 ; et/ou
une partie ou la totalité des éléments RE autres que des éléments RE où les ports 0 à 3 de signal CRS sont situés, dans une partie ou la totalité des symboles autres que des symboles occupés par des signaux PSS et des canaux PDCCH dans un créneau DwPTS de la sous-trame 1 ; et/ou
une partie ou la totalité des éléments RE autres que des éléments RE où les ports 0 à 3 de signal CRS sont situés, dans des symboles spécifiques de la sous-trame 6 ;
dans lequel les symboles spécifiques sont des symboles dans la sous-trame 6, dont des indices sont les mêmes que des indices des symboles dans lesquels le canal PBCH ayant une couverture améliorée est transmis, dans le créneau DwPTS de la sous-trame 1 ;
ou
la détermination, par l'équipement utilisateur, des ressources, dans la ou les trames radio, avec lesquelles le canal PBCH ayant une couverture améliorée est mis en correspondance, consiste :
à déterminer, au moyen de l'équipement utilisateur, les ressources suivantes dans la ou les trames radio en tant que ressources avec lesquelles le canal PBCH ayant une couverture améliorée est mis en correspondance :
une partie ou la totalité des éléments RE autres que des éléments RE où les ports 0 à 3 de signal CRS sont situés, dans une partie ou la totalité des symboles où des ports de signal CRS sont situés, dans une partie ou la totalité des symboles autres que des symboles occupés par un canal PBCH existant et des canaux PDCCH dans une partie ou la totalité de la sous-trame 0, de la sous-trame 5 et de la sous-trame 9 ; et/ou
une partie ou la totalité des éléments RE autres que des éléments RE où les ports 0 à 3 de signal CRS sont situés, dans une partie ou la totalité des symboles autres que des symboles occupés par des signaux PSS et des canaux PDCCH dans un créneau DwPTS de la sous-trame 1 ; et/ou
une partie ou la totalité des éléments RE autres que des éléments RE où les ports 0 à 3 de signal CRS sont situés, dans des symboles spécifiques de la sous-trame 6 ;
dans lequel les symboles spécifiques sont des symboles dans la sous-trame 6, dont des indices sont les mêmes que des indices des symboles dans lesquels le canal PBCH ayant une couverture améliorée est transmis, dans le créneau DwPTS de la sous-trame 1.

3. Dispositif côté réseau d'un système de communication LTE conçu pour transmettre un canal de diffusion physique (PBCH), le dispositif côté réseau comprenant :
un premier module de détermination (810) configuré pour déterminer des ressources, dans au moins une trame radio, avec lesquelles un canal PBCH ayant une couverture améliorée est mis en correspondance ; et
un module de transmission (820) configuré pour transmettre le canal PBCH ayant une couverture améliorée sur les ressources déterminées ;
**caractérisé en ce que** le premier module de détermination (810) est configuré pour déterminer les ressources suivantes dans la ou les trames radio en tant que ressources avec lesquelles le canal PBCH ayant une couverture améliorée est mis en correspondance :
une partie ou la totalité des éléments de resources (RE) autres que des éléments RE où les ports 0 à 3 de signal de référence spécifique à une cellule (CRS) sont situés, dans une partie ou la totalité des symboles autres que des symboles occupés par un canal PBCH existant, des signaux de synchronisation secondaires (SSS) et des canaux de commande de liaison descendante physiques (PDCCH) dans la sous-trame 9 ; et/ou
une partie ou la totalité des éléments RE autres que des éléments RE où les ports 0 à 3 de signal CRS sont situés, dans une partie ou la totalité des symboles autres que des symboles occupés par des signaux de synchronisation primaires (PSS) et des canaux PDCCH dans un créneau temporel pilote de liaison descendante (DwPTS) de la sous-trame 1 ; et/ou
une partie ou la totalité des éléments RE autres que des éléments RE où les ports 0 à 3 de signal CRS sont situés, dans des symboles spécifiques de la sous-trame 6 ;
dans lequel les symboles spécifiques sont des symboles dans la sous-trame 6, dont des indices sont les mêmes que des indices des symboles dans lesquels le canal PBCH ayant une couverture améliorée est transmis, dans le créneau DwPTS de la sous-trame 1 ;
ou
le premier module de détermination (810) est configuré pour déterminer les ressources suivantes dans la ou les trames radio en tant que ressources avec lesquelles le canal PBCH ayant une couverture améliorée est mis en correspondance :
une partie ou la totalité des éléments RE autres que des éléments RE où les signaux de référence d'informations d'état de canal (CSI-RS) réservés sont situés, et des éléments RE où les ports 0 à 3 de signal CRS sont situés, dans une partie ou la totalité des symboles autres que des symboles occupés par un canal PBCH existant, des signaux SSS et des canaux PDCCH dans la sous-trame 9 ; et/ou
une partie ou la totalité des éléments RE autres que des éléments RE où les ports 0 à 3 de signal CRS sont situés, dans une partie ou la totalité des symboles autres que des symboles occupés par des signaux PSS et des canaux PDCCH dans un créneau DwPTS de la sous-trame 1 ; et/ou
une partie ou la totalité des éléments RE autres que des éléments RE où les ports 0 à 3 de signal CRS sont situés, dans des symboles spécifiques de la sous-trame 6 ;
dans lequel les symboles spécifiques sont des symboles dans la sous-trame 6, dont des indices sont les mêmes que des indices des symboles dans lesquels le canal PBCH ayant une couverture améliorée est transmis, dans le créneau DwPTS de la sous-trame 1 ;
ou
le premier module de détermination (810) est configuré pour déterminer les ressources suivantes dans la ou les trames radio en tant que ressources avec lesquelles le canal PBCH ayant une couverture améliorée est mis en correspondance :
une partie ou la totalité des éléments RE autres que des éléments RE où les ports 0 à 3 de signal CRS sont situés, dans une partie ou la totalité des symboles où des ports de signal CRS sont situés, dans une partie ou la totalité des symboles autres que des symboles occupés par un canal PBCH existant et des canaux PDCCH dans une partie ou la totalité de la sous-trame 0, de la sous-trame 5 et de la sous-trame 9 ; et/ou
une partie ou la totalité des éléments RE autres que des éléments RE où les ports 0 à 3 de signal CRS sont situés, dans une partie ou la totalité des symboles autres que des symboles occupés par des signaux PSS et des canaux PDCCH dans un créneau DwPTS de la sous-trame 1 ; et/ou
une partie ou la totalité des éléments RE autres que des éléments RE où les ports 0 à 3 de signal CRS sont situés, dans des symboles spécifiques de la sous-trame 6 ;
dans lequel les symboles spécifiques sont des symboles dans la sous-trame 6, dont des indices sont les mêmes que des indices des symboles dans lesquels le canal PBCH ayant une couverture améliorée est transmis, dans le créneau DwPTS de la sous-trame 1.

4. Équipement utilisateur d'un système de communication LTE conçu pour recevoir un canal de diffusion physique (PBCH), l'équipement utilisateur comprenant :
un second module de détermination (910) configuré pour déterminer des ressources, dans au moins une trame radio, avec lesquelles un canal PBCH ayant une couverture améliorée est mis en correspondance ; et
un module de réception (920) configuré pour recevoir le canal PBCH ayant une couverture améliorée sur les ressources déterminées ;
**caractérisé en ce que**, dans lequel le second module de détermination (910) est configuré pour déterminer les ressources suivantes dans la ou les trames radio en tant que ressources avec lesquelles le canal PBCH ayant une couverture améliorée est mis en correspondance :
une partie ou la totalité des éléments de ressources (RE) autres que des éléments RE où les ports 0 à 3 de signal de référence spécifique à une cellule (CRS) sont situés, dans une partie ou la totalité des symboles autres que des symboles occupés par un canal PBCH existant, des signaux de synchronisation secondaires (SSS) et des canaux de commande de liaison descendante physiques (PDCCH) dans la sous-trame 9 ; et/ou
une partie ou la totalité des éléments RE autres que des éléments RE où les ports 0 à 3 de signal CRS sont situés, dans une partie ou la totalité des symboles autres que des symboles occupés par des signaux de synchronisation primaires (PSS) et des canaux PDCCH dans un créneau temporel pilote de liaison descendante (DwPTS) de la sous-trame 1 ; et/ou
une partie ou la totalité des éléments RE autres que des éléments RE où les ports 0 à 3 de signal CRS sont situés, dans des symboles spécifiques de la sous-trame 6 ;
dans lequel les symboles spécifiques sont des symboles dans la sous-trame 6, dont des indices sont les mêmes que des indices des symboles dans lesquels le canal PBCH ayant une couverture améliorée est transmis, dans le créneau DwPTS de la sous-trame 1,
dans lequel le second module de détermination (910) est configuré pour déterminer les ressources suivantes dans la ou les trames radio en tant que ressources avec lesquelles le canal PBCH ayant une couverture améliorée est mis en correspondance :
une partie ou la totalité des éléments RE autres que des éléments RE où les signaux de référence d'informations d'état de canal (CSI-RS) réservés sont situés, et des éléments RE où les ports 0 à 3 de signal CRS sont situés, dans une partie ou la totalité des symboles autres que des symboles occupés par un canal PBCH existant, des signaux SSS et des canaux PDCCH dans la sous-trame 9 ; et/ou
une partie ou la totalité des éléments RE autres que des éléments RE où les ports 0 à 3 de signal CRS sont situés, dans une partie ou la totalité des symboles autres que des symboles occupés par des signaux PSS et des canaux PDCCH dans un créneau DwPTS de la sous-trame 1 ; et/ou
une partie ou la totalité des éléments RE autres que des éléments RE où les ports 0 à 3 de signal CRS sont situés, dans des symboles spécifiques de la sous-trame 6 ;
dans lequel les symboles spécifiques sont des symboles dans la sous-trame 6, dont des indices sont les mêmes que des indices des symboles dans lesquels le canal PBCH ayant une couverture améliorée est transmis, dans le créneau DwPTS de la sous-trame 1 ;
dans lequel le seconde module de détermination (910) est configuré pour déterminer les ressources suivantes dans la ou les trames radio en tant que ressources avec lesquelles le canal PBCH ayant une couverture améliorée est mis en correspondance :
une partie ou la totalité des éléments RE autres que des éléments RE où les ports 0 à 3 de signal CRS sont situés, dans une partie ou la totalité des symboles où des ports de signal CRS sont situés, dans une partie ou la totalité des symboles autres que des symboles occupés par un canal PBCH existant et des canaux PDCCH dans une partie ou la totalité de la sous-trame 0, de la sous-trame 5 et de la sous-trame 9 ; et/ou
une partie ou la totalité des éléments RE autres que des éléments RE où les ports 0 à 3 de signal CRS sont situés, dans une partie ou la totalité des symboles autres que des symboles occupés par des signaux PSS et des canaux PDCCH dans un créneau DwPTS de la sous-trame 1 ; et/ou
une partie ou la totalité des éléments RE autres que des éléments RE où les ports 0 à 3 de signal CRS sont situés, dans des symboles spécifiques de la sous-trame 6 ;
dans lequel les symboles spécifiques sont des symboles dans la sous-trame 6, dont des indices sont les mêmes que des indices des symboles dans lesquels le canal PBCH ayant une couverture améliorée est transmis, dans le créneau DwPTS de la sous-trame 1.
